# EUROPEAN PATENT APPLICATION

(11) **EP 4 155 909 A1**
(43) Date of publication of application: **29.03.2023**
(21) Application number: 22196990.0
(22) Date of filing: 21.09.2022
(51) Int. Cl.: G06F 8/71, H04L 9/00

(54) **SYSTEMS, METHODS, AND COMPUTER PROGRAM PRODUCTS FOR BLOCKCHAIN SECURED CODE SIGNING OF AUTONOMOUS VEHICLE SOFTWARE ARTIFACTS**

(30) Priority: 22.09.2021 US 202117481758
(71) Applicant: Argo AI, LLC, Pittsburgh, PA 15222 (US)
(72) Inventor: Cline, Alexander, Pittsburgh, 15222 (US)
(74) Representative: Hofstetter, Schurack & Partner

(57) **Abstract**

Provided are systems, methods, and computer program products for secure code signing of software artifacts in a permissioned blockchain for recording, distributing, and auditing of software artifacts via hash digests, artifact signatures, and worker signatures, comprising a build system worker to generate a software release blockchain, and insert software artifact blocks including a hash digest of the software artifact, a code signing worker to generate and insert a signature block of a software artifact block comprising a signature of the hash digest in the software artifact block, a check system worker to generate a check block associated with the signature block, the check block comprising an attestation verifying at least the integrity of the hash digest and the authenticity of the signature of the hash digest, and one or more processors, configured to verify the software release blockchain based at least on the check block.

## Description

### CROSS REFERENCE TO RELATED APPLICATION(S)

This application claims priority to United States Patent Application No. 17/481,758, filed September 22, 2021, the entire contents of which are hereby incorporated by reference in their entirety.

### BACKGROUND

### Field

This disclosure relates generally to blockchains for verifying authenticity and integrity of software artifacts, safely and securely releasing software to an autonomous vehicle, and a software release blockchain system including blocks for software releases, artifacts, signature generation, and signature validation, as well as code signing and digest check workers, whereby a software release blockchain includes one or more signed software artifacts that can be checked for integrity and authenticity at any time using a check block that verifies a signing block of the same software release blockchain.

### Description of Related Art

Code signing security is a type of digital guarantee that the contents of a software program, file, update, executable, or system has not been corrupted and tampered with after it was signed by the publisher. Like an electronic version of a wax seal, it guarantees safety to the recipient, such as the identity of the author, and that it hasn't been opened and tampered with by an attacker who wants to take information and data for malicious purposes. Code signing provides confidence that software programs reach their intended recipient, have not been improperly modified, are not part of a man-in-the-middle attack, and are obtained (e.g., downloaded, received, etc.) from authentic publishers.

Crypto tools such as public key infrastructure (PKI) and hash algorithms are used to place a digital signature on a software program, so that its authenticity and integrity can be verified upon installation and execution. During code signing, a digital signature may associate code to content via a public and private keypair of a code signing certificate from Certificate Authorities (CAs). Then, when a user downloads or encounters the signed code, the user's system software or application accesses the signature with a corresponding public key that may be used to verify the digital signature. For example, when a code signing certificate is used, the system searches for a root certificate having an identity that it trusts (or recognizes) to authenticate the signature. Once the digital signature is verified, a hash of the contents must be verified, this may be performed by comparing a hash used to originally sign the software program against a hash on the downloaded application. If the system trusts the root certificate and the hashes match, then the software program (e.g., download, executable, etc.) can continue, or alternatively, the system interrupts the download with a warning that the system does not trust the root certificate, the signature, or one of the hashes do not match.

However, vulnerabilities are common in existing systems. For example, existing systems, such as large monolithic code signing infrastructures, hash and sign the software program in one step, by sending the entire software program from the build system to the signing system. The signing system uses a hash algorithm to generate the digest of the software program, signs the digest with a private key, and returns the software and signature to another system for distribution. However, this may create efficiency, scalability, and security problems. Each software program sent from the build system to the signing system has a cost at least in terms of network bandwidth, storage capacity, resource consumption, CPU resource, and time. Resources may be wasted having to build it in one system, then transfer the software for hashing, and signing in another, then transferring it again for distribution.

Other existing signing systems introduce insecurity when distributing the hashing and signing functionality such that, the system that signs software programs is separate (e.g., without access, shared resources, shared files, etc.) from the system that hashes (e.g., creates a digest of the software program). These systems are designed to increase scalability, reduce resource consumption, and increase security of the private key used for code signing. In these systems, a digest of the software program is made with a specialized hashing algorithm (e.g., a hash of the software artifact) before sending the digest of the software artifact (e.g., a software artifact digest, etc.) of the software artifact to the code signing application, where the digest of the software artifact is signed with the private key. Afterward, a signature of the software artifact is returned to the system for hashing, along with a public certificate corresponding to the private key, which is used for validating the code signing signature. However, security problems exist with the hashing application in this scenario. Authenticity and integrity problems can present themselves since the signing system has no way of verifying a hash was generated properly. Of course, without the software program, a hash cannot be generated properly by the hashing system, and there is no way to know or verify that the hash was done properly without a copy of the software artifact.

Additionally, an attacker could generate a rogue message, call it a digest, and then send the rogue message masquerading as a digest to the signing application. Since the signing system would have no way of knowing that the message was spoofed, it would automatically sign it and send a signed version of the spoofed message with a public certificate back, implying to an outside actor that the code is safe. The hashing system (or any other system that trusts the signing system) would then incorrectly trust the authenticity of the signed rogue message.

Thus, existing systems that streamline by foregoing transfer of the software program between systems, carry a risk by implicitly trusting that the hashing system is secure, in order to save on resources in a transfer of the software program or objects created therein, back and forth. Additionally, an attacker is able to spoof a hash (e.g., create a hash with a known content, such as all zeros, etc.), and others may trust the hash and incorrectly sign the spoofed hash. In other existing systems, where a software program is signed and hashed at the same time, without sufficient resources for large or frequent software releases, code signing methods may not meet performance requirements or fail completely blocking timely authentic software distribution.

### SUMMARY

At least some of the problems associated with the existing solutions will be shown solved by the subject matter of the herein appended independent claims. Additional advantageous aspects are discussed in the dependent claims. Accordingly, disclosed are improved computer-implemented systems, methods, uses, and computer program products for a blockchain system of releasing, signing, and checking software artifacts of a software release.

According to non-limiting embodiments or aspects, provided is a computer-implemented method for secure code signing of one or more software artifacts with a permissioned blockchain for recording, distributing, and auditing of software artifact via hash digests and worker signatures, comprising generating, by a build system worker, a software release blockchain including a root block and one or more software release blocks, each software release block comprising one or more software artifact blocks associated with the one or more software artifacts comprising a software release, providing a block digest for defining a software release ledger and verifying a software release in the one or more software artifact blocks; inserting, by the build system worker, a new software release block in the software release blockchain, the new software release block including release block information of the verifying block digest and a hash digest of the release block information; inserting, by the build system worker into the software release block, one or more software artifact blocks associated with a software artifact of a new software release, each software artifact block of the one or more software artifact blocks including software artifact information and a hash digest of the software artifact information; attaching, by a code signing worker, a sign block associated with a software artifact block of the one or more software artifact blocks, the sign block comprising a signature of the hash digest of the software artifact associated with the software artifact block; attaching, by a check system worker, a check block associated with the sign block, the check block comprising an attestation verifying at least integrity of the hash digest and authenticity of the signature of the hash digest; and verifying the software release blockchain based at least on the check block.

In some non-limiting embodiments or aspects, the computer-implemented method further includes inserting the new software release block further comprises inserting the new software release block in the software release blockchain after a most recent software release block.

In some non-limiting embodiments or aspects, the computer-implemented method further includes generating the new software release block in response to determining the most recent software release block in the software release blockchain; generating the software artifact block associated with the software artifact of the new software release, including artifact information and a hash digest of the software artifact; detecting the software artifact block is a new software artifact block by detecting the hash digest includes a new software artifact block based on verifying at least a portion of the release block information; in response to detecting the new software artifact block, generating the sign block associated with the new software artifact block; detecting the software artifact block is a new software artifact block and the sign block is a new sign block; and in response to detecting the new sign block and the new software artifact block, generating the check block verifying the new sign block.

In some non-limiting embodiments or aspects, the computer-implemented method further includes generating a plurality of software artifact blocks, each of the plurality of software artifact blocks attached to and including a hash digest of a previously generated software artifact block, wherein the build system worker further comprises a plurality of build system workers, and wherein each build system worker is associated with a private key that is unique, and inserting a software artifact using the private key.

In some non-limiting embodiments or aspects, the computer-implemented method further includes using a private key and a public key, and wherein the private key and the public key are each parts of an asymmetric key pair, and a software release is associated with a source code control system, and the software artifact is securely stored within the software release repository system.

In some non-limiting embodiments or aspects, the computer-implemented method further includes the code signing worker authenticates release block information from the software artifact block, and wherein generating a sign block associated with the software artifact block comprises: obtaining the release block information of the software artifact block; checking the hash digest of a previous digest block; checking the hash digest of a new digest block; extracting a software artifact digest from the release block information; retrieving the software artifact associated with the software artifact digest from a software release repository; generating a hash digest by performing a hashing operation on the retrieved software artifact; correlating the hash digest extracted from the release block information and the hash digest generated from the retrieved software artifact; and inserting a new sign block with a digest block defined by a plurality of the following: a digest of the previous digest block, a current timestamp, a name of the software artifact, a software artifact hash digest, a signature of a hash digest, a serial number of a code signing certificate used to generate a signature, a signature of a build system worker, or a digest of signing information associated with a signing block.

In some non-limiting embodiments or aspects, the computer-implemented method further includes generating a new check block associated with the new sign block, the check block verifies digital worker signatures, before: obtaining software artifact information of the software artifact block; obtaining signing block information of the new sign block; checking a hash digest of the previous digest block; checking a hash digest of the new digest block; retrieving the software artifact from the software release repository; hashing the retrieved software artifact to generate a hash digest; correlating the hash digest extracted from the release block information with the hash digest generated from the retrieved software artifact; checking the signature in the signing block; and inserting the check block with a digest block defined by a plurality of the following: a digest of the previous digest block, a current timestamp, a name of the software artifact, a hash digest of a parent or previous digest block, a signature of a hash digest, a serial number of a code signing certificate used to generate a signature, a value representing the check state of the artifact digest, a value representing the check state of the artifact digest signature, a signature of a build system worker, or a hash digest of signing information associated with a signing block.

In some non-limiting embodiments or aspects, the computer-implemented method further includes obtaining a chain of software artifact blocks that include a reference to the original software artifact; comparing the chain of software artifact blocks to a respective associated check block; and verifying a signing hash was generated properly, based on verifying information in a digest block of a sign block defining a plurality of the following: a digest of a previous digest block, a digest of a current digest block, a current timestamp, a name of the software artifact, a reference to a source code repository commit, a hash digest, a signature of a hash digest, a serial number of a code signing certificate used to generate a signature, a signature of a build system worker, a value representing the check state of the artifact digest, a value representing the check state of the artifact digest signature, and a digest of signing information associated with a signing block.

In some non-limiting embodiments or aspects, the computer-implemented method further wherein the sign block and the check block are generated synchronously.

In some non-limiting embodiments or aspects, the computer-implemented wherein the check block is generated asynchronously after the sign block, and the check block and sign block do not impede each other.

In some non-limiting embodiments or aspects, the computer-implemented method wherein the software artifact block includes a link to a storage or repository location of the software artifact, and wherein a software release blockchain may include a plurality of independent software releases, each of the independent software releases initiating from a separated software release block, and wherein a release blockchain comprises: a plurality of software artifact blocks, a plurality of sign blocks, and an auditing blockchain that includes a plurality of check blocks associated with a respective plurality of software artifact blocks and a respective plurality of signing blocks.

In some non-limiting embodiments or aspects, the computer-implemented method further includes validating one or more hash digests, by first determining a current hash digest, then a signature of a check signing worker for each check block in a chain of software artifact blocks of the software release blockchain before proceeding, after receiving a validation of the check signing worker, checking a previous digest, and validating worker signatures of each software artifact of a software release.

In some non-limiting embodiments or aspects, the computer-implemented method further includes a hashing algorithm that has been authorized twice via the hash digest of the software artifact information and a software artifact digest of a check sign; a signing algorithm has been approved twice via a software artifact digest from a first worker and a software artifact signature check from a second worker; and an authentic signed software artifact digest, obtained from a software artifact signature check.

In some non-limiting embodiments or aspects, the computer-implemented method further includes determining a timestamp included in a sign block of a software artifact block; comparing the timestamp of a sign block for a software artifact block against a timestamp of the software artifact in a code storage or, alternatively, a code repository; generating the signature of a software artifact requires two secrets, credentials to the code signing application and the code signing private key; and the code signing framework API generates an alert that the build system worker has generated an invalid software artifact block, and sends the alert to at least one build system worker when the code signing application detects if a software artifact is tampered with or, alternatively, if a software artifact digest is modified.

In some non-limiting embodiments or aspects, the computer-implemented method further includes verifying the software release blockchain based at least on the check block is provided in an AV, the method comprising: transferring software release blockchain to the AV via an on-board software release distribution worker; first authorizing the build system worker, or alternatively, determining by the on-board software release distribution worker that a certified build system worker generated the software artifact; determining by the on-board software release distribution worker that an approved code signing framework worker signed the software artifact; and determining by the on-board software release distribution worker that an approved check system worker checked the hash digest of the software artifact and software artifact signature.

In some non-limiting embodiments or aspects, the computer-implemented method further includes comparing a hash digest of a software artifact block with a hash generated by the check system worker of the software artifact, or alternatively, a sign block signature.

In some non-limiting embodiments or aspects, the computer-implemented method further includes auditing comprises: obtaining the software release blockchain in an AV, retrieving the software artifacts, and checking each software artifact before installing a software artifact in the AV system.

In some non-limiting embodiments or aspects, the computer-implemented method further includes determining a most recent software release block of the one or more software release blocks in the software release blockchain by traversing the one or more software release blocks while checking a block digest associated with each of the one or more software release blocks for a most recent release block digest.

Without excluding further possible embodiments, certain example embodiments are summarized in the following numbered clauses:
Clause 1: A computer-implemented method for secure code signing of one or more software artifacts for recording, distributing, and auditing of software artifact via hash digests and worker signatures, comprising: generating, by a build system worker, a software release blockchain including a root block and one or more software release blocks, each software release block comprising one or more software artifact blocks associated with the one or more software artifacts comprising a software release, providing a block digest for defining a software release ledger and verifying a software release in the one or more software artifact blocks; inserting, by the build system worker, a new software release block in the software release blockchain, the new software release block including release block information of the verifying block digest and a hash digest of the release block information; inserting, by the build system worker into the software release block, one or more software artifact blocks associated with a software artifact of a new software release, each software artifact block of the one or more software artifact blocks including software artifact information and a hash digest of the software artifact information; attaching, by a code signing worker, a sign block associated with a software artifact block of the one or more software artifact blocks, the sign block comprising a signature of the hash digest of the software artifact associated with the software artifact block; attaching, by a check system worker, a check block associated with the sign block, the check block comprising an attestation verifying at least integrity of the hash digest and authenticity of the signature of the hash digest; and verifying the software release blockchain based at least on the check block.
Clause 2: The computer-implemented method of clause 1, comprising: inserting the new software release block further comprises inserting the new software release block in the software release blockchain after a most recent software release block.
Clause 3: The computer-implemented method of clauses 1-2, comprising: generating the new software release block in response to determining the most recent software release block in the software release blockchain; generating the software artifact block associated with the software artifact of the new software release, including artifact information and a hash digest of the software artifact; detecting the software artifact block is a new software artifact block by detecting the hash digest includes a new software artifact block based on verifying at least a portion of the release block information; in response to detecting the new software artifact block, generating the sign block associated with the new software artifact block; detecting the software artifact block is a new software artifact block and the sign block is a new sign block; and in response to detecting the new sign block and the new software artifact block, generating the check block verifying the new sign block.
Clause 4: The computer-implemented method of clauses 1-3, wherein generating a software artifact block comprises: generating a plurality of software artifact blocks, each of the plurality of software artifact blocks attached to and including a hash digest of a previously generated software artifact block, wherein the build system worker further comprises a plurality of build system workers, and wherein each build system worker is associated with a private key that is unique, and inserting a software artifact using the private key.
Clause 5: The computer-implemented method of clauses 1-4, wherein the signature is generated using a private key and a public key, and wherein the private key and the public key are each parts of an asymmetric key pair, and further wherein a software release is associated with a source code control system, and the software artifact is securely stored within the software release repository system.
Clause 6: The computer-implemented method of clauses 1-5, wherein the code signing worker authenticates release block information from the software artifact block, and wherein generating a sign block associated with the software artifact block comprises: obtaining the release block information of the software artifact block; checking the hash digest of a previous digest block; checking the hash digest of a new digest block; extracting a software artifact digest from the release block information; retrieving the software artifact associated with the software artifact digest from a software release repository; generating a hash digest by performing a hashing operation on the retrieved software artifact; correlating the hash digest extracted from the release block information and the hash digest generated from the retrieved software artifact; and inserting a new sign block with a digest block defined by a plurality of the following: a digest of the previous digest block, a current timestamp, a name of the software artifact, a software artifact hash digest, a signature of a hash digest, a serial number of a code signing certificate used to generate a signature, a signature of a build system worker, or a digest of signing information associated with a signing block.
Clause 7: The computer-implemented method of clauses 1-6, wherein generating a new check block associated with the new sign block, the check block verifies digital worker signatures, before: obtaining software artifact information of the software artifact block; obtaining signing block information of the new sign block; checking a hash digest of the previous digest block; checking a hash digest of the new digest block; retrieving the software artifact from the software release repository; hashing the retrieved software artifact to generate a hash digest; correlating the hash digest extracted from the release block information with the hash digest generated from the retrieved software artifact; checking the signature in the signing block; and inserting the check block with a digest block defined by a plurality of the following: a digest of the previous digest block, a current timestamp, a name of the software artifact, a hash digest of a parent or previous digest block, a signature of a hash digest, a serial number of a code signing certificate used to generate a signature, a value representing the check state of the artifact digest, a value representing the check state of the artifact digest signature, a signature of a build system worker, or a hash digest of signing information associated with a signing block.
Clause 8: The computer-implemented method of clauses 1-7, wherein verifying the software release blockchain further comprises: obtaining a chain of software artifact blocks that include a reference to the original software artifact; comparing the chain of software artifact blocks to a respective associated check block; and verifying a signing hash was generated properly, based on verifying information in a digest block of a sign block defining a plurality of the following: a digest of a previous digest block, a digest of a current digest block, a current timestamp, a name of the software artifact, a reference to a source code repository commit, a hash digest, a signature of a hash digest, a serial number of a code signing certificate used to generate a signature, a signature of a build system worker, a value representing the check state of the artifact digest, a value representing the check state of the artifact digest signature, and a digest of signing information associated with a signing block.
Clause 9: The computer-implemented method of clauses 1-8, wherein the sign block and the check block are generated synchronously.
Clause 10: The computer-implemented method of clauses 1-9, wherein the check block is generated asynchronously after the sign block, and the check block and sign block do not impede each other.
Clause 11: The computer-implemented method of clauses 1-10, wherein the software artifact block includes a link to a storage or repository location of the software artifact, and wherein a software release blockchain may include a plurality of independent software releases, each of the independent software releases initiating from a separated software release block, and wherein a release blockchain comprises: a plurality of software artifact blocks, a plurality of sign blocks, and an auditing blockchain that includes a plurality of check blocks associated with a respective plurality of software artifact blocks and a respective plurality of signing blocks.
Clause 12: The computer-implemented method of clauses 1-11, wherein verifying the software release blockchain based at least on the check block, comprises: validating one or more hash digests, by first determining a current hash digest, then a signature of a check signing worker for each check block in a chain of software artifact blocks of the software release blockchain before proceeding, after receiving a validation of the check signing worker, checking a previous digest, and validating worker signatures of each software artifact of a software release.
Clause 13: The computer-implemented method of clauses 1-12, wherein a signature is created for each software artifact of a respective release block, and further wherein a blockchain ledger is verified for release by secure systems, as attested to by: a hashing algorithm that has been authorized twice via the hash digest of the software artifact information and a software artifact digest of a check sign; a signing algorithm has been approved twice via a software artifact digest from a first worker and a software artifact signature check from a second worker; and an authentic signed software artifact digest, obtained from a software artifact signature check.
Clause 14: The computer-implemented method of clauses 1-13, wherein verifying the software release blockchain based at least on the check block, comprises: determining a timestamp included in a sign block of a software artifact block; comparing the timestamp of a sign block for a software artifact block against a timestamp of the software artifact in a code storage or, alternatively, a code repository; generating the signature of a software artifact requires two secrets, credentials to the code signing application and the code signing private key; and the code signing framework API generates an alert that the build system worker has generated an invalid software artifact block, and sends the alert to at least one build system worker when the code signing application detects if a software artifact is tampered with or, alternatively, if a software artifact digest is modified.
Clause 15: The computer-implemented method of clauses 1-14, wherein verifying the software release blockchain based at least on the check block is provided in an AV, the method comprising: transferring software release blockchain to the AV via an on-board software release distribution worker; first authorizing the build system worker, or alternatively, determining by the on-board software release distribution worker that a certified build system worker generated the software artifact; determining by the on-board software release distribution worker that an approved code signing framework worker signed the software artifact; and determining by the on-board software release distribution worker that an approved check system worker checked the hash digest of the software artifact and software artifact signature.
Clause 16: The computer-implemented method of clauses 1-15, wherein any block is determined to be invalid by comparing a hash digest of a software artifact block with a hash generated by the check system worker of the software artifact, or alternatively, a sign block signature.
Clause 17: The computer-implemented method of clauses 1-16, wherein the software artifacts are associated with an AV system, and auditing comprises: obtaining the software release blockchain in an AV, retrieving the software artifacts, and checking each software artifact before installing a software artifact in the AV system.
Clause 18: The computer-implemented method of clauses 1-17, wherein determining a most recent software release block of the one or more software release blocks in the software release blockchain by traversing the one or more software release blocks while checking a block digest associated with each of the one or more software release blocks for a most recent release block digest.
Clause 19: A system for secure code signing of software artifacts with a permissioned blockchain for recording, distributing, and auditing of software artifact via hash digests and worker signatures, comprising: a build system worker including one or more processors configured to generate a software release blockchain, wherein the software release blockchain includes a root block and one or more software release blocks that provide a verifying block digest for a software release, wherein a separate software release blockchain is provided in the one or more software release blocks, each comprising one or more software artifact blocks associated with a software artifact of the software release, wherein the build system worker is further configured to insert a new software release block into the software release blockchain, such that the new software release block includes release block information of the verifying block digest and a hash digest of the release block information, and further wherein the build system worker is configured to generate and insert one or more software artifact blocks associated with a software artifact of a new software release, such that each software artifact block of the one or more software artifact blocks includes software artifact information and a hash digest of the software artifact information; a code signing worker comprising one or more processors configured to generate and insert a sign block associated with a software artifact block of the one or more software artifact blocks, wherein the sign block comprises a signature of the hash digest in the software artifact block, a check system worker comprising one or more processors configured to generate and insert a check block associated with the sign block, wherein the check block comprises an attestation verifying at least integrity of the hash digest and authenticity of the signature of the hash digest; and one or more processors configured to verify the software release blockchain based at least on the check block.
Clause 20: The system of clause 19, comprising: inserting the new software release block further comprises inserting the new software release block in the software release blockchain after a most recent software release block.
Clause 21: The system of any of clauses 19-20, comprising: generating the new software release block in response to determining the most recent software release block in the software release blockchain; generating the software artifact block associated with the software artifact of the new software release, including artifact information and a hash digest of the software artifact; detecting the software artifact block is a new software artifact block by detecting the hash digest includes a new software artifact block based on verifying at least a portion of the release block information; in response to detecting the new software artifact block, generating the sign block associated with the new software artifact block; detecting the software artifact block is a new software artifact block and the sign block is a new sign block; and in response to detecting the new sign block and the new software artifact block, generating the check block verifying the new sign block.
Clause 22: The system of any of clauses 19-21, wherein generating a software artifact block comprises: generating a plurality of software artifact blocks, each of the plurality of software artifact blocks attached to and including a hash digest of a previously generated software artifact block, wherein the build system worker further comprises a plurality of build system workers, and wherein each build system worker is associated with a private key that is unique, and inserting a software artifact using the private key.
Clause 23: The system of any of clauses 19-22, wherein the signature is generated using a private key and a public key, and wherein the private key and the public key are each parts of an asymmetric key pair, and further wherein a software release is associated with a source code control system, and the software artifact is securely stored within the software release repository system.
Clause 24: The system of any of clauses 19-23, wherein the code signing worker authenticates release block information from the software artifact block, and wherein generating a sign block associated with the software artifact block comprises: obtaining the release block information of the software artifact block; checking the hash digest of a previous digest block; checking the hash digest of a new digest block; extracting a software artifact digest from the release block information; retrieving the software artifact associated with the software artifact digest from a software release repository; generating a hash digest by performing a hashing operation on the retrieved software artifact; correlating the hash digest extracted from the release block information and the hash digest generated from the retrieved software artifact; and inserting a new sign block with a digest block defined by a plurality of the following: a digest of the previous digest block, a current timestamp, a name of the software artifact, a software artifact hash digest, a signature of a hash digest, a serial number of a code signing certificate used to generate a signature, a signature of a build system worker, or a digest of signing information associated with a signing block.
Clause 25: The system of any of clauses 19-24, wherein generating a new check block associated with the new sign block, the check block verifies digital worker signatures, before: obtaining software artifact information of the software artifact block; obtaining signing block information of the new sign block; checking a hash digest of the previous digest block; checking a hash digest of the new digest block; retrieving the software artifact from the software release repository; hashing the retrieved software artifact to generate a hash digest; correlating the hash digest extracted from the release block information with the hash digest generated from the retrieved software artifact; checking the signature in the signing block; and inserting the check block with a digest block defined by a plurality of the following: a digest of the previous digest block, a current timestamp, a name of the software artifact, a hash digest of a parent or previous digest block, a signature of a hash digest, a serial number of a code signing certificate used to generate a signature, a value representing the check state of the artifact digest, a value representing the check state of the artifact digest signature, a signature of a build system worker, or a hash digest of signing information associated with a signing block.
Clause 26: The system of any of clauses 19-25, wherein verifying the software release blockchain further comprises: obtaining a chain of software artifact blocks that include a reference to the original software artifact; comparing the chain of software artifact blocks to a respective associated check block; and verifying a signing hash was generated properly, based on verifying information in a digest block of a sign block defining a plurality of the following: a digest of a previous digest block, a digest of a current digest block, a current timestamp, a name of the software artifact, a reference to a source code repository commit, a hash digest, a signature of a hash digest, a serial number of a code signing certificate used to generate a signature, a signature of a build system worker, a value representing the check state of the artifact digest, a value representing the check state of the artifact digest signature, and a digest of signing information associated with a signing block.
Clause 27: The system of any of clauses 19-26, wherein the sign block and the check block are generated synchronously.
Clause 28: The system of any of clauses 19-27, wherein the check block is generated asynchronously after the sign block, and the check block and sign block do not impede each other.
Clause 29: The system of any of clauses 19-28, wherein the software artifact block includes a link to a storage or repository location of the software artifact, and wherein a software release blockchain may include a plurality of independent software releases, each of the independent software releases initiating from a separated software release block, and wherein a release blockchain comprises: a plurality of software artifact blocks, a plurality of sign blocks, and an auditing blockchain that includes a plurality of check blocks associated with a respective plurality of software artifact blocks and a respective plurality of signing blocks.
Clause 30: The system of any of clauses 19-29, wherein verifying the software release blockchain based at least on the check block, comprises: validating one or more hash digests, by first determining a current hash digest, then a signature of a check signing worker for each check block in a chain of software artifact blocks of the software release blockchain before proceeding, after receiving a validation of the check signing worker, checking a previous digest, and validating worker signatures of each software artifact of a software release
Clause 31: The system of any of clauses 19-30, wherein a signature is created for each software artifact of a respective release block, and further wherein a blockchain ledger is verified for release by secure systems, as attested to by: a hashing algorithm that has been authorized twice via the hash digest of the software artifact information and a software artifact digest of a check sign; a signing algorithm has been approved twice via a software artifact digest from a first worker and a software artifact signature check from a second worker; and an authentic signed software artifact digest, obtained from a software artifact signature check.
Clause 32: The system of any of clauses 19-31, wherein verifying the software release blockchain based at least on the check block, comprises: determining a timestamp included in a sign block of a software artifact block; comparing the timestamp of a sign block for a software artifact block against a timestamp of the software artifact in a code storage or, alternatively, a code repository; generating the signature of a software artifact requires two secrets, credentials to the code signing application and the code signing private key; and the code signing framework API generates an alert that the build system worker has generated an invalid software artifact block, and sends the alert to at least one build system worker when the code signing application detects if a software artifact is tampered with or, alternatively, if a software artifact digest is modified.
Clause 33: The system of any of clauses 19-32, wherein verifying the software release blockchain based at least on the check block is provided in an AV, the method comprising: transferring software release blockchain to the AV via an on-board software release distribution worker; first authorizing the build system worker, or alternatively, determining by the on-board software release distribution worker that a certified build system worker generated the software artifact; determining by the on-board software release distribution worker that an approved code signing framework worker signed the software artifact; and determining by the on-board software release distribution worker that an approved check system worker checked the hash digest of the software artifact and software artifact signature.
Clause 34: The system of any of clauses 19-33, wherein any block is determined to be invalid by comparing a hash digest of a software artifact block with a hash generated by the check system worker of the software artifact, or alternatively, a sign block signature.
Clause 35: The system of any of clauses 19-34, wherein the software artifacts are associated with an AV system, and auditing comprises: obtaining the software release blockchain in an AV, retrieving the software artifacts, and checking each software artifact before installing a software artifact in the AV system.
Clause 36: The system of any of clauses 19-35, wherein determining a most recent software release block of the one or more software release blocks in the software release blockchain by traversing the one or more software release blocks while checking a block digest associated with each of the one or more software release blocks for a most recent release block digest.
Clause 37: A computer program product for secure code signing of software artifacts with a permissioned blockchain for recording, distributing, and auditing of software artifact via hash digests and worker signatures, comprising instructions that, when executed by at least one processor, cause the one or more processors to: generate a software release blockchain including a root block and one or more software release blocks, that provides a verifying block digest with a software release, separate software release blockchain provided in the one or more software release blocks, each comprising one or more software artifact blocks associated with a software artifact of the software release; insert a new software release block in the software release blockchain, the new software release block including release block information of the verifying block digest and a hash digest of the release block information; insert one or more software artifact blocks associated with a software artifact of a new software release, each software artifact block of the one or more software artifact blocks including software artifact information and a hash digest of the software artifact information; attach a sign block associated with a software artifact block of the one or more software artifact blocks, the sign block comprising a signature of the hash digest in the software artifact block; attach a check block associated with the sign block, the check block comprising an attestation verifying at least integrity of the hash digest and authenticity of the signature of the hash digest; and verify the software release blockchain based at least on the check block.
Clause 38: A system comprising means for performing the steps of any of the above method clauses.
Clause 39: A computer software program, or a data-storage medium storing the program, comprising instructions which when executed via one or more processors cause any of the processors to perform the steps of any of the above method clauses.
Clause 40: Use of the check block and/or the software release blockchain as generated in any of the above method clauses for providing (e.g., loading, uploading, updating or their likes) a software at a vehicle, or to an automotive system.
Clause 41: The check block and/or the software release blockchain, or a data storage medium storing the check block and/or the software release blockchain, as generated in any of the above method clauses.

These and other features and characteristics of the present disclosure, as well as, the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the present disclosure.

### BRIEF DESCRIPTION OF THE DRAWINGS

Additional advantages and details of the present disclosure are explained in greater detail below with reference to the example embodiments that are illustrated in the accompanying schematic figures, in which:
FIG. 1 is a diagram of non-limiting embodiments or aspects of an autonomous vehicle development environment in which systems, apparatuses, and/or methods, as described herein, may be implemented;
FIG. 2 is a diagram of non-limiting embodiments or aspects of an autonomous vehicle in which software releases for autonomous vehicle systems, as described herein, may be implemented;
FIGS. 3A-3C are diagrams of non-limiting embodiments or aspects of an autonomous vehicle development environment in which systems, apparatuses, and/or methods, as described herein, may be implemented;
FIGS. 4A and 4B are flowcharts illustrating non-limiting embodiments or aspects of a method for verifying integrity and authenticity of software releases for autonomous vehicle systems according to the principles of the present disclosure; and
FIG. 5 is a step diagram of non-limiting embodiments or aspects of an alternative embodiment for verifying integrity and authenticity of software releases for autonomous vehicle systems according to the principles of the present disclosure.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosure as it is oriented in the drawing figures. However, it is to be understood that the disclosure may assume various alternative variations and step sequences, except where expressly specified to the contrary. It is also to be understood that the specific devices and processes illustrated in the attached drawings, and described in the following specification, are simply exemplary embodiments or aspects of the disclosure. Hence, specific dimensions and other physical characteristics related to the embodiments or aspects of the embodiments or aspects disclosed herein are not to be considered as limiting unless otherwise indicated. In addition, terms of relative position, such as, "vertical" and "horizontal", or "front" and "rear", when used, are intended to be relative to each other and need not be absolute, and only refer to one possible position of the device associated with those terms depending on the device's orientation.

No aspect, component, element, structure, act, step, function, instruction, and/or the like used herein should be construed as critical or essential unless explicitly described as such. Also, as used herein, the articles "a" and "an" are intended to include one or more items, and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise. Additionally, when terms, such as, "first" and "second" are used to modify a noun, such use is simply intended to distinguish one item from another, and is not intended to require a sequential order unless specifically stated.

In some non-limiting embodiments or aspects, one or more aspects associated with downloading, checking, and executing autonomous vehicle software and systems are described herein, in connection with thresholds (e.g., a tolerance, a tolerance threshold, etc.). As used herein, satisfying a threshold may refer to a value (e.g., a score, an objective score, etc.) being greater than the threshold, more than the threshold, higher than the threshold, greater than or equal to the threshold, less than the threshold, fewer than the threshold, lower than the threshold, less than or equal to the threshold, equal to the threshold, etc.

As used herein, the terms "communication" and "communicate" may refer to the reception, receipt, transmission, transfer, provision, and/or the like of information (e.g., data, signals, messages, instructions, commands, and/or the like). For one unit (e.g., a device, a system, a component of a device or system, combinations thereof, and/or the like) to be in communication with another unit means that the one unit is able to directly or indirectly receive information from and/or send (e.g., transmit) information to the other unit. This may refer to a direct or indirect connection that is wired and/or wireless in nature. Additionally, two units may be in communication with each other even though the information transmitted may be modified, processed, relayed, and/or routed between the first and second unit. For example, a first unit may be in communication with a second unit even though the first unit passively receives information and does not actively send information to the second unit. As another example, a first unit may be in communication with a second unit if at least one intermediary unit (e.g., a third unit located between the first unit and the second unit) processes information received from the first unit and sends the processed information to the second unit. In some non-limiting embodiments or aspects, a message may refer to a network packet (e.g., a data packet and/or the like) that includes data.

As used herein, the term "computing device" may refer to one or more electronic devices configured to process data. A computing device may, in some examples, include the necessary components to receive, process, and output data, such as, a processor, a display, a memory, an input device, a network interface, and/or the like. A computing device may be included in a device on-vehicle an autonomous vehicle (AV). As an example, a computing device may include an on-vehicle specialized computer (e.g., a sensor, a controller, a data store, a communication interface, a display interface, etc.), a mobile device (e.g., a smartphone, standard cellular phone, or integrated cellular device,), a portable computer, a wearable device (e.g., watches, glasses, lenses, clothing, and/or the like), a personal digital assistant (PDA), and/or other like devices. A computing device may also be a desktop computer or other form of non-mobile computer.

As used herein, the terms "client" and "client device" may refer to one or more computing devices that access a service made available by a server. In some non-limiting embodiments or aspects, a "client device" may refer to one or more devices that facilitate a maneuver by an AV, such as, one or more remote devices communicating with an AV. In some non-limiting embodiments or aspects, a client device may include a computing device configured to communicate with one or more networks and/or facilitate vehicle movement, such as, but not limited to, one or more vehicle computers, one or more mobile devices, and/or other like devices.

As used herein, the term "server" may refer to or include one or more computing devices that are operated by or facilitate communication and processing for multiple parties in a network environment, such as, the Internet, although it will be appreciated that communication may be facilitated over one or more public or private network environments and that various other arrangements are possible. Further, multiple computing devices (e.g., servers, data stores, controllers, communication interfaces, mobile devices, and/or the like) directly or indirectly communicating in the network environment may constitute a "system". Reference to "a server" or "a processor," as used herein, may refer to a previously-recited server and/or processor that is recited as performing a previous step or function, a different server and/or processor, and/or a combination of servers and/or processors. For example, as used in the specification and the claims, a first server and/or a first processor that is recited as performing a first step or function may refer to the same or different server and/or a processor recited as performing a second step or function. In some cases, one or all of the processors may be implemented as a remote server and/or a cloud-computing service.

As used herein, the term "system" may refer to one or more computing devices or combinations of computing devices, such as, but not limited to, processors, servers, client devices, software applications, and/or other like components. In addition, reference to "a server" or "a processor," as used herein, may refer to a previously-recited server and/or processor that is recited as performing a previous step or function, a different server and/or processor, and/or a combination of servers and/or processors. For example, as used in the specification and the claims, a first server and/or a first processor that is recited as performing a first step or function may refer to the same or different server and/or a processor recited as performing a second step or function.

An "electronic device" or a "computing device" refers to a device that includes a processor and a memory. Each device may have its own processor and/or memory, or the processor and/or memory may be shared with other devices as in a virtual machine or container arrangement. The memory will contain or receive programming instructions that, when executed by the processor, cause the electronic device to perform one or more operations according to the programming instructions.

The terms "memory," "memory device," "data store," "data storage facility," and the like each refer to a non-transitory device on which computer-readable data, programming instructions, or both are stored. Except where specifically stated otherwise, the terms "memory," "memory device," "data store," "data storage facility," and the like are intended to include single device embodiments, embodiments in which multiple memory devices together or collectively store a set of data or instructions, as well as, individual sectors within such devices.

The terms "processor" and "processing device" refer to a hardware component of an electronic device that is configured to execute programming instructions. Except where specifically stated otherwise, the singular term "processor" or "processing device" is intended to include both single-processing device embodiments and embodiments in which multiple processing devices together or collectively perform a process.

The term "vehicle" refers to any moving form of conveyance that is capable of carrying either one or more human occupants and/or cargo and is powered by any form of energy. The term "vehicle" includes, but is not limited to, cars, trucks, vans, trains, autonomous vehicles, aircraft, aerial drones, and the like. An "autonomous vehicle" (AV) is a vehicle having a processor, programming instructions, and drivetrain components that are controllable by the processor without requiring a human operator. An AV may be fully autonomous in that it does not require a human operator for most or all driving conditions and functions, or it may be semi-autonomous in that a human operator may be required in certain conditions or for certain operations, or that a human operator may override the vehicle's autonomous system and may take control of the vehicle. The AV can be a ground-based AV (e.g., car, truck, bus, etc.), an air-based AV (e.g., airplane, drone, helicopter, or other aircraft), or other types of vehicles (e.g., watercraft).

As used herein, "map data" includes data associated with a road (e.g., an identity and/or a location of a roadway of a road, an identity and/or location of a segment of a road, etc.), data associated with an object in proximity to a road (e.g., a building, a lamppost, a crosswalk, a curb of the road, etc.), data associated with a lane of a roadway (e.g., the location and/or direction of a travel lane, a parking lane, a turning lane, a bicycle lane, etc.), data associated with traffic control of a road (e.g., the location of and/or instructions associated with lane markings, traffic signs, traffic lights, etc.), and/or the like. According to some embodiments or aspects, a map of a geographic location includes one or more routes (e.g., nominal route, driving route, etc.) that include one or more roadways. According to some non-limiting embodiments or aspects, map data associated with a map of the geographic location associates the one or more roadways with an indication of whether an AV can travel on that roadway.

As used herein, a "road" refers to a paved or otherwise improved path between two places that allows for travel by a vehicle (e.g., autonomous vehicle). Additionally or alternatively, a road includes a roadway and a sidewalk in proximity to (e.g., adjacent, near, next to, touching, etc.) the roadway. In some non-limiting embodiments or aspects, a roadway includes a portion of a road on which a vehicle is intended to travel and is not restricted by a physical barrier or by separation so that the vehicle is able to travel laterally. Additionally or alternatively, a roadway (e.g., a road network, one or more roadway segments, etc.) includes one or more lanes in which a vehicle may operate, such as, a travel lane (e.g., a lane upon which a vehicle travels, a traffic lane, etc.), a parking lane (e.g., a lane in which a vehicle parks), a turning lane (e.g., a lane in which a vehicle turns from), and/or the like. Additionally or alternatively, a roadway includes one or more lanes in which a pedestrian, bicycle, or other vehicle may travel, such as, a crosswalk, a bicycle lane (e.g., a lane in which a bicycle travels), a mass transit lane (e.g., a lane in which a bus may travel), and/or the like. According to some non-limiting embodiments or aspects, a roadway is connected to another roadway to form a road network, for example, a lane of a roadway is connected to another lane of the roadway and/or a lane of the roadway is connected to a lane of another roadway.

As used herein, "sensor data" includes data from one or more sensors. For example, sensor data may include light detection and ranging (LiDAR) point cloud maps (e.g., map point data, etc.) associated with a geographic location (e.g., a location in three-dimensional space relative to the LiDAR system of a mapping vehicle) of a number of points (e.g., a point cloud) that correspond to objects that have reflected a ranging laser of one or more mapping vehicles at the geographic location. As an example, sensor data may include LiDAR point cloud data that represents objects in the roadway, such as, other vehicles, pedestrians, cones, debris, etc.

As used herein, "public key encryption" involves encoding a message to protect it from unwanted viewers by passing the message through a mathematical function (called a "cipher") which uses a key to hide the original values in the message, and decoding the message depends on having the key that returns the values back to their original state, allowing the message to be read. In public key encryption (e.g., asymmetric encryption), the key that encodes the message and the one that decodes it are different (i.e., asymmetrical). It's called public key, because one key is made widely available (the "public key") while the other is kept private (the "private key") to ensure the security of the message. Public key encryption relies on private keys being kept secure, secret, and unavailable to those who would intercept, attack, or adulterate messages. Whether the public key is used to encrypt or verify the message depends on the nature of the message. For example, the private key is used to sign a message anyone can read, but cannot tamper with without invalidating the signature. In cases where everyone is able to encrypt a message, but not open it (e.g., not able to be intercepted by the wrong person, etc.), it is encrypted with the public key, but only decrypted with the associated private key.

As used herein, "hashing" (e.g., a hash function) involves a method of cryptography that is designed to be irreversible. Hash functions are one-way algorithms, based on a mathematical function which takes an arbitrary input message and produces a deterministic output (e.g. a message digest). The one-way nature of the hash function means given the output, it's impossible to determine the input that generated it. As used herein, hashing a message commonly serves one of two purposes, to protect the confidentiality of secret information (e.g. to validate the correctness of a password) or to confirm a message has been unmodified (e.g. to confirm the integrity of downloaded software). In the first case, when a message digest is created by hashing a message (e.g., a document, a number of data fields, etc.) for storage or transmission, in the event of an attack, all the hacker has stolen is unreadable, scrambled values (e.g., hash values, hash codes, digests, hashes, etc.). In the second case, message integrity can be determined, by hashing a copy of the original message and comparing the result to the original message's digest value. One does not need to read the message itself to determine that the message has not been modified, just need the output of hashing the message (e.g., message digest).

As used herein, a "software artifact" includes the released code (in the case of a code library), released executable (in the case of a program), a library, or a byproduct of software development rather than the product itself. An artifact may, more specifically, include a collection of non-volatile resources used by computer programs, such as configuration data, documentation, help data, message templates, pre-written code and subroutines, classes, values, or type specifications. Additionally, another important usage is to safely provide updates and patches to existing AV software programs or services.

Code signing systems can provide assurance of the authenticity and integrity of the downloaded software. However, if not implemented correctly, existing systems are insecure, unauthenticated, misleading, inefficient, insufficient, and inaccurate. Existing systems include monolithic systems, as discussed above, of a type that do not separate components into discrete parts, such as signing, checking, and hashing, whereby one system fits all, created and executed to build, sign, and authenticate everything (e.g., build, sign, and/or authenticate software code signatures). Existing systems also create inefficiencies by requiring many more resources in proportion to the volume and size of software programs to be signed, by requiring large software programs that must be transferred or copied between build systems and code signing systems in a way that necessitates large bandwidth expenditures, or by requiring the provisioning of resources that are wasted and left unused when not actively being used for code signing.

Moreover, existing systems may generate a build for a software program release and a hash of the software program before it is signed (e.g., in a separate programming space). Since the system downloads the software program to hash after building, even if the software program is rehashed to check the integrity and the hash matches, the system cannot know or be sure (e.g., within a threshold of certainty) that the software program and hash were not modified in order to pass a rogue software program as being verified. Such existing systems may inaccurately trust and/or verify a software program. In addition, records of signed software programs may be stored in existing systems, such as an unprotected database internal to a legacy code signing system which are known targets which are easy for attackers to penetrate.

Further, existing systems also have known drawbacks associated with the generally monolithic nature and stacking of functions that build, sign, check, and record code signatures in only one system. Existing systems may be insufficiently configured, or insecurely configured, leading to inaccurate assumptions and/or insufficient handling of security for software release and lacking techniques to efficiently and authentically, verify and validate the authentication and integrity. Existing systems also require more resources, such as, resources that are proportional to the volume and size of the software programs they are protecting and become inefficient moving large volumes between systems in a way that requires large bandwidth resources.

Additionally, or alternatively, software authenticity in existing systems suffers from an origination problem, where one system performs some steps (e.g., generates an artifact and generates a digest), while another system performs other steps (e.g., signing system downloads the software artifact and digest, and rehashes it to check the integrity). In such systems, data transfer becomes inefficient and can cause bottlenecks, and even if the digests match, the software and/or hash algorithm may still be a rogue program that was modified outside the protections of the system, such as during storage but before distribution. Moreover, records of signed software programs that are stored in existing systems (e.g., in a database internal to the legacy code signing system) are often exposed to other attacks and easily manipulated by internal attacks or social engineering.

Still further, the centralization of artifact hashing and signing tools to ensure the authenticity and integrity of the software artifacts and signatures requires extensive resources to build and operate. Resources required include large bandwidth, storage, and compute requirements to transport, retain, and hash and sign software programs after generating build systems. Records of artifacts and signatures are vulnerable each time they are transferred, moved, or stored, such as in legacy databases, file systems, and repositories, which are vulnerable to attack and breach. Additionally, such systems can also be difficult to scale and/or to integrate with modern continuous integration and continuous deployment systems, such as in an autonomous vehicle development environment. Moreover, autonomous vehicle systems may provide inaccurate and insufficient software integrity checking and may result in inefficient or insufficient safety assurance, since such checking can be piecemeal or not at all in an autonomous vehicle platform's software stack.

Provided are improved systems, methods, and computer program products for blockchain security during code building, hashing, signing, checking, and releasing of software to an autonomous vehicle system. In some non-limiting embodiments or aspects, a system, such as a blockchain software release system, includes 3-tiers, a build system worker, a code signing worker, and a digest check worker, that implement an authenticated blockchain for code signing and are configured to interact with each other to generate a software release blockchain including a root block, one or more software release blocks, and one or more software artifact blocks for validating a software release associated with a source code control system, such that each software release block comprises one or more software artifact blocks that are used to efficiently and accurately verify integrity and authenticity of each software artifact of the software release.

In some non-limiting embodiments or aspects, inserting a new software release block in the software release blockchain, efficiently and accurately updates the new software release block to include release block information and a hash digest that is generated for the new software release block and inserted (e.g., at runtime) after a most recent previous software release block (e.g., a software release blockchain for a new software release). In addition, the blockchain software release system generates a software artifact block associated with each software artifact of the new software release. Each software artifact block includes at least artifact information and a digest of the software artifact to more accurately and sufficiently track and secure software artifacts in a new release. The blockchain software release system inserts a new software artifact block after detecting a new software artifact and generates the signature (e.g., a sign block) in response to detecting the software artifact block, the sign block associated with the new software artifact block. The blockchain software release system generates a signature checking block (e.g., check block) in response to detecting the new sign block, where the blockchain software release system associates the new sign block with a check block verifying the release block (e.g., each release block), and verifies the software release block at least based on the new check block associated with the new sign block.

According to the systems, methods, and computer program products described herein, the use of the blockchain software release system, implements build, signing and checking via discrete framework tiers, that more efficiently and accurately operate independently via minimized, purpose-built services, to more sufficiently scale independently of each other, and more accurately verify the integrity and authenticity of a software program (e.g., safely provide software programs, software updates, and patches to existing software).

In this way, the blockchain software release system may efficiently and accurately verify a software release, more efficiently and accurately verify software artifacts, and still further, generate an accurate signature check for each software artifact that can accurately, and in a scaled manner, for remote and distributed systems, check a signature and hash to verify any software release artifact. Further, the blockchain software release system implements tiers for separating the build, sign, and check workings into 3-tier frameworks (e.g., n-tier) that provide data applications separated into multiple tiers, the distributed 3-tier applications (e.g., multitier applications, etc.) separate build, sign, and check into discrete tiers that are distributed to provide more efficient use of resources, such as data access, processing, transmission, and/or security (e.g., the tier application provides sufficient capability to store sensitive information in one or more of the tiers, that maintains isolation from a tier not storing sensitive information). Moreover, the blockchain software release system allows savings in resources that are based on demand, which is indicated by the volume of blocks added to the blockchain. Thus, software releases, software artifacts, and hashes need not be transmitted and copied to and from dedicated systems that may have vulnerabilities or little security, since the only information (e.g., resources) needed to support the signing of an artifact may be lightweight (e.g., the blockchain's release, artifact, sign, and check blocks) and reduce time during execution and coded into the blocks on the chain. Still further, software artifacts and their digests are cryptographically assured to be authentic and unmodified as they are generated by the build system, recorded within the authenticated blockchain, and independently checked, the record of which can be verified for authenticity and integrity.

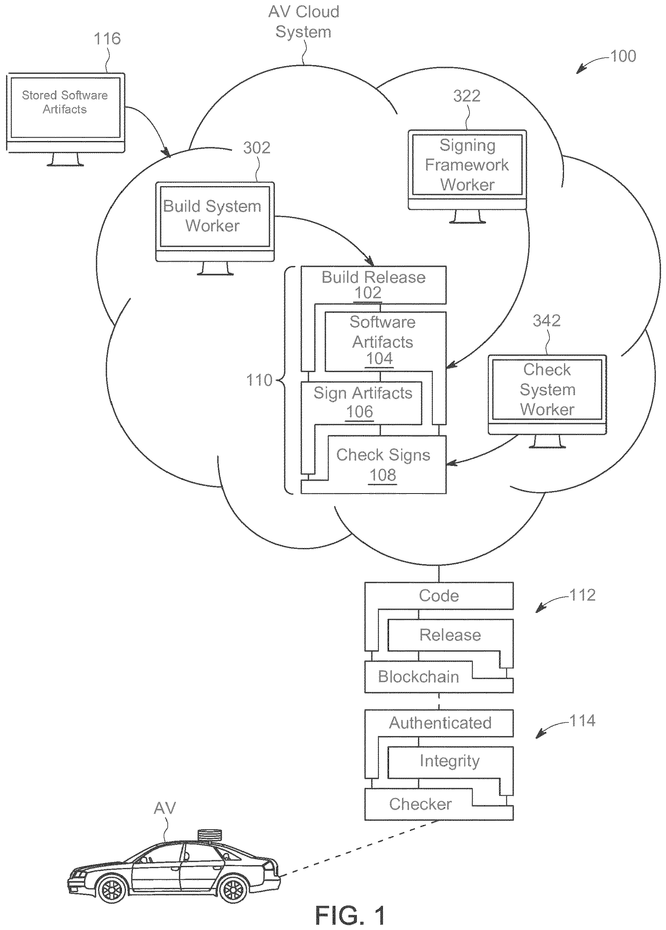

Referring now to FIG. 1, provided is an exemplary environment 100 comprising an AV cloud system, autonomous vehicle (AV), and software release blockchain 110 in which devices, systems, and/or methods, described herein, may be implemented in a combination of cloud computing and on-vehicle software systems, to provide safety and security for a software release and ensure the authenticity and guarantee the software release, or component parts of the software release, are not altered. According to some non-limiting embodiments or aspects, AV cloud system includes build system worker 302, signing framework worker 322, and check system worker 342. Environment 100 can be used to control an aspect of an autonomous vehicle.

In some non-limiting embodiments or aspects, build system worker 302 generates build release block 102 (e.g., a software release, a software package, etc.). In such an example, build release block 102 is associated with software artifact blocks 104. For example, build system worker 302 also generates software artifact blocks 104 that is included in build release 102, one build release block 102 may have multiple software artifact blocks 104 (e.g., many software artifact blocks, a plurality of software artifacts, etc.) When the software release blockchain 110 is initially created, build system worker 302 (e.g., or another worker in the AV cloud system) also creates a root block (e.g., a 0 block, initial block, etc.) which obtains or contains a code signing public key that is encoded into the root block. The code signing public key is the encryption key for the software artifacts that are signed on software release blockchain 110. The code signing public key can be easily found by build system worker 302, signing framework worker 322, and check system worker 342, as it is encoded into the first block of the software release blockchain 110 (i.e. the root block).

In some non-limiting embodiments or aspects, build system worker 302 may generate or create many blocks in the software release blockchain 110 for each release, and build the blocks with unique identification information based on software release information. Additionally, build system worker 302 may generate multiple software releases in one software release blockchain 110, whereby, each of the multiple software releases includes only the software artifact block 104 unique to the build. Although software artifact blocks 104 may be identical across releases once software release blockchain 110 adds software artifact blocks 104 to a release, it is uniquely identified as further discussed below.

Signing framework worker 322 generates signature blocks 106 for software artifact blocks 104 corresponding to a particular build release block 102. For example, build system worker 302 generates a chain of signature blocks 106 for a release that must be signed (e.g., each artifact is individually signed to provide unique authentication and integrity specific to each software artifact). In some non-limiting embodiments or aspects, signing framework worker 322 signs software artifact blocks 104 for the particular build release block 102 after software release blockchain 110 is obtained, (e.g., sent, transmitted, or obtained by signing framework worker 322).

In some non-limiting embodiments or aspects, check system worker 342 asynchronously obtains software artifact blocks 104 that are added to the software release blockchain 110. For example, check system worker 342 works in parallel to signing framework worker 322, to asynchronously detect and download each signature block 106. In some examples, check system worker 342 works at a different time, but not in parallel, to signing framework worker 322. Check system worker 342 may detect newly signed software artifact blocks 104 in software release blockchain 110 and obtain stored software artifacts 116 from the software build archive (e.g., a location where software artifacts are stored, staged, or reside, either before being added to build release 102, or after being added to build release 102, for example, obtained via a link or request, etc.). After obtaining a new signature block 106 (e.g., a block associated with stored software artifacts 116, etc.), check system worker 342 verifies the information, signature, and hash associated with software artifact blocks 104. Check system worker 342 generates check signature blocks 108 that may be used to check, validate, or verify each of the stored software artifacts 116 in the software release. In some examples, check system worker 342 checks sign artifact blocks 106 as they are generated by signing framework worker 322 and generates check signature blocks 108 in an asynchronous step that does not affect the performance (e.g., slow or hinder) of build system worker 302 or signing framework worker 322. Alternatively, signature artifact blocks 106 and check signature blocks 108 may be generated in a sequence, in groups, or randomized, to distribute the processing load and create additional security.

In some non-limiting embodiments or aspects, one or more systems of the AV cloud system generates software release blockchain 110 to include build release block 102 that includes one or more software artifact blocks 104 and one or more check signature blocks 108. In some non-limiting embodiments or aspects, software release blockchain 110 may be separated to transmit or transfer only a portion of software release blockchain 110, such as, for example, when transporting software release check signature blocks 108.

In some non-limiting embodiments or aspects, AV cloud system transmits the software release blockchain 110 to the AV, or alternatively, to multiple AV in a fleet or other subgroup. After receiving software release blockchain 110, the AV may utilize software release blockchain 110 (e.g., one or more portions of software release blockchain 110, etc.) to verify the integrity and authenticity of the software release associated with it.

The above actions and constraints are provided for example purposes and other possible information, inferences, and/or validations are within the scope of this disclosure.

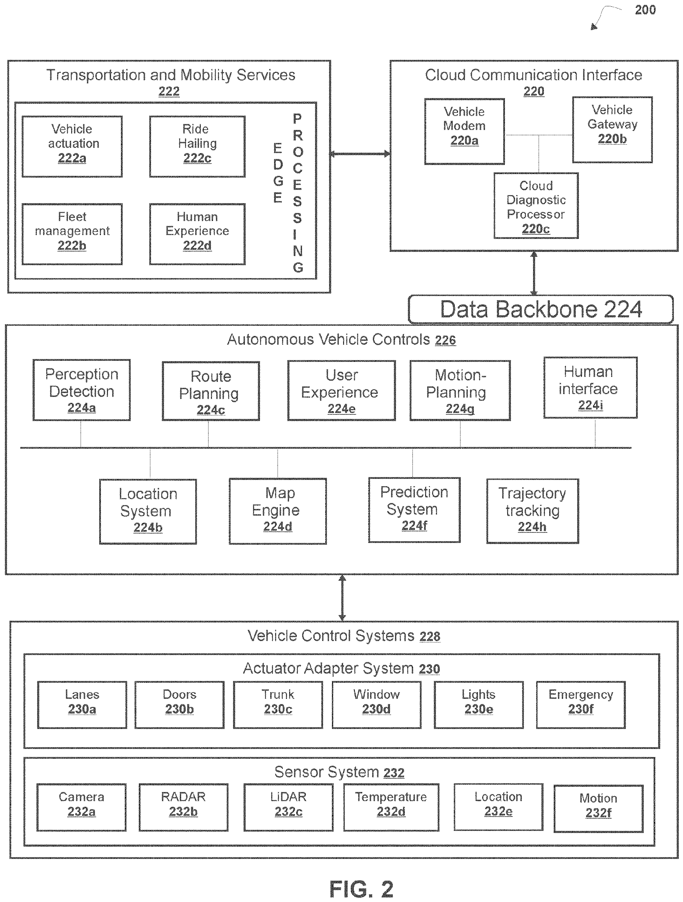

Referring now to FIG. 2, FIG. 2 is a diagram of an example vehicle computing system 200 in which devices, systems, and/or methods, described herein, may be implemented. As shown in FIG. 2, vehicle computing system 200 includes cloud communication interface 220, transportation and mobility service(s) 222, data backbone 224, autonomous vehicle controls 226, vehicle control systems 228, actuator adapter system 230, and sensor system 232.

Vehicle computing system 200 may interconnect (e.g., establish a connection to communicate and/or the like) via cloud communication interface 220 to remote cloud systems, offering cloud services, remote data, and processing systems (e.g., mobility and autonomy services and sources, computing devices, external computing systems, etc.), for example, vehicle modem 220a of vehicle computing system 200 may utilize wired connections and/or wireless connections to provide an input or output exchange with AV cloud system (e.g., one or more systems of AV cloud system, etc.) and/or one or more external Transportation as a Service ("TaaS") clouds (e.g., one or more remote external service clouds, etc.). Additionally, vehicle modem 220a may utilize wired connections and/or wireless connections to provide an input or output exchange with local vehicle systems (e.g., one or more systems of an autonomous vehicle, etc.). Vehicle modem 220a connects to and transmits and receives data from vehicle gateway 220b. Cloud diagnostic processor 220c provides diagnostic algorithms to process cloud service messages received by cloud communication interface 220, for example, which could provide one or more systems for staging and processing one or more blockchains received from a central or remote cloud, such as for processing data in edge processors.

Cloud communication interface 220 may comprise any type of network, such as, a local area network (LAN), a wide area network (WAN) (such as, a fleet management system utilizing a secure network, or a secure connection via the Internet, a cellular network, a satellite network, or a combination thereof, and may be wired or wireless).

With continued reference to FIG. 2, vehicle computing system 200 includes transportation and mobility services 222 that utilize edge processing and connect to cloud communication interface 220 for accessibility to cloud service communications and data backbone 224. Transportation and mobility services 222 includes on-vehicle TaaS service components for processing specified cloud services on board an autonomous vehicle, such as, vehicle actuation 222a, fleet management 222b, ride hailing 222c, and human experience 222d.

In some non-limiting embodiments or aspects, vehicle computing system 200 includes components for autonomous operation of the autonomous vehicle to store or retrieve (e.g., request, receive, etc.) vehicle information from data backbone 224 (e.g., one or more data stores and/or one or more central servers via cloud communication interface 220). For example, vehicle computing system 200 may synchronize (e.g., update, change, etc.) a subset of data residing in a data store(s) of data backbone 224 with user experience 224e, with map data (e.g., a portion or sub-map of map data in a specified geographic location) in map engine 224d, or vehicle control data in one or more vehicle control components of vehicle control systems 228 as the autonomous vehicle is traversing a roadway. Multiple autonomous vehicles may be coupled to each other and/or coupled from a remote location to data backbone 224 via cloud communication interface 220. Data backbone(s) 224 may include more than one data store(s), such as, without limitation, map data store(s), traffic information data store(s), user experience data store(s), point of interest data store(s), trajectory data store(s), and/or the like. Data backbone 224 may comprise a data array or cluster of data servers, may replicate with one or more remote data store(s) via cloud communication interface 220, or may comprise web applications, web application servers, remote connected backend servers, or a combination thereof.

With continued reference to FIG. 2, autonomous vehicle control 226 may receive data collected by data backbone 224, one or more actuators of actuator adapter system 230, or one or more sensors of sensor system 232, analyze, and provide one or more vehicle control instructions to perception detection 224a, location system 224b, route planning 224c, map engine 224d, user experience 224e, prediction system 224f, motion planning 224g, trajectory tracking 224h, and human interface 224i.

Location system 224b may include and/or may retrieve map data (e.g., map information, etc.) from map engine 224d which provides detailed information about a surrounding environment of the autonomous vehicle. In some non-limiting embodiments or aspects, location system 224b may include and/or may retrieve map data (e.g., map information, etc.) that provides detailed information about the surrounding environment of the autonomous vehicle. The map data can provide information regarding: the identity or location of different roadways, road segments, buildings, or other objects; the location and directions of traffic lanes (e.g., the location and direction of a parking lane, a turning lane, a bicycle lane, or other lanes within a particular roadway); traffic control data (e.g., the location and instructions of signage, traffic lights, or other traffic control devices); and/or any other map data (as described above) that provides information and assists autonomous vehicle control 226 in analyzing a surrounding environment of the autonomous vehicle. In some non-limiting embodiments or aspects, map data may also include reference path information corresponding to common patterns of vehicle travel along one or more lanes such that a motion of an object is constrained to the reference path (e.g., locations within traffic lanes on which an object commonly travels). Such reference paths may be pre-defined, such as, the centerline of the traffic lanes. Optionally, the reference path may be generated based on historical observations of vehicles or other objects over a period of time (e.g., reference paths for straight line travel, lane merge, a turn, or the like).

In some non-limiting embodiments or aspects, location system 224b may also include and/or may receive information relating to a trip or route of a user, real-time traffic information on the route, and/or the like.

Location system 224b may also comprise and/or may communicate with route planning 224c which generates a navigation route from a start position to a destination position for AV cloud system. Route planning 224c may access map engine 224d (e.g., a central map data store stored in data pipeline) to identify possible routes and road segments where a vehicle may travel, to travel from a start position to a destination position. Route planning 224c may score the possible routes and identify a preferred route to reach the destination. For example, route planning 224c may generate a navigation route that minimizes a distance traveled or other cost function while traversing the route and may further access the traffic information and/or estimates that can affect an amount of time it will take to travel on a particular route. Depending on implementation, route planning 224c may generate one or more routes using various routing methods, such as, Dijkstra's algorithm, Bellman-Ford's algorithm, and/or the like. Route planning 224c may also use the traffic information to generate a navigation route which reflects an expected experience or condition of the route (e.g., current day of the week or current time of day, etc.), such that a route generated for travel during rush-hour may differ from a route generated for travel late at night. Route planning 224c may also generate more than one navigation route to a destination and send more than one of these navigation routes to user experience 224e (e.g., a tablet, a mobile device, etc.) for selection by a user from among various possible routes.

Perception detection 224a may detect perception information of the surrounding environment of autonomous vehicle during travel from the start position to the destination along the preferred route, perception detection 224a may detect objects or other roadway characteristics based on sensor data provided by sensor system 232 and information obtained by location system 224b. The perception information represents what an ordinary driver perceives in the surrounding environment of a vehicle. The perception data may include information relating to one or more objects in the environment of the autonomous vehicle. For example, prediction system 224f may process sensor data (e.g., from LiDAR 232c, RADAR 232b, camera 232a images, etc.) in order to identify objects and/or features in the geospatial area of the autonomous vehicle. Detected objects may include traffic signals, roadway boundaries, vehicles, pedestrians, and/or obstacles in the roadway, and/or the like. Perception detection 224a may use known object recognition and detection algorithms, video tracking algorithms, and computer vision algorithms (e.g., track objects frame-to-frame iteratively over a number of time periods) to determine the perception.

In some non-limiting embodiments or aspects, perception detection 224a may also determine, for one or more identified objects in the environment, a current state of the object. The state information may include, without limitation, for each object: current location; current speed and/or acceleration; current heading; current orientation; size/footprint; type (e.g., vehicle vs. pedestrian vs. bicycle vs. static object or obstacle); and/or other state information.

Prediction system 224f may predict the future locations, trajectories, and/or actions of the objects based at least in part on perception information (e.g., the state data for each object) received from perception detection 224a, the location information received from location system 224b, the sensor data, and/or any other data describing a past and/or current state of the objects, the autonomous vehicle, the surrounding environment, and/or their relationship(s). For example, if an object is a vehicle and the current driving environment includes an intersection, prediction system 224f may predict whether the object will likely move straight forward or make a turn. If the perception data indicates that the intersection has no traffic light, prediction system 224f may also predict whether the vehicle may fully stop prior to entering the intersection. Such predictions may be made for a given time horizon (e.g., 5 seconds in the future). In certain embodiments, prediction system 224f may provide the predicted trajectory or trajectories for each object to motion planning 224g.

Motion planning 224g may determine a motion plan for the autonomous vehicle based on the perception data and/or the prediction data. Specifically, given predictions about the future locations of proximate objects and other perception data, motion planning 224g can determine a motion plan for autonomously navigating a route relative to one or more objects at their future locations.

In some non-limiting embodiments or aspects, motion planning 224g may receive one or more predictions from prediction system 224f and make a decision regarding how to handle objects in the environment of the autonomous vehicle. For a particular object (e.g., a vehicle with a given speed, a direction, a turning angle, etc.), motion planning 224g determines whether to overtake, yield, stop, and/or pass based on, for example, traffic conditions, map data, state of the autonomous vehicle, and/or the like. In some non-limiting embodiments or aspects, for a given object, motion planning 224g may decide a course to handle the object and may determine one or more safe actions for responding to the presence of the object. For example, for a given object, motion planning 224g may decide to pass the object and then may determine whether to pass on the left side or right side of the object (including motion parameters, such as, speed and lane change decisions). Motion planning 224g, in connection with trajectory tracking 224h, may also assess a risk of a collision between a detected object and autonomous vehicle. If the risk exceeds an acceptable threshold, it may determine whether a collision can be avoided if the autonomous vehicle follows a defined vehicle trajectory and/or implements one or more dynamically generated emergency maneuvers performed in a pre-defined time period (e.g., N milliseconds). If the collision can be avoided, then autonomous vehicle control 226 may transmit appropriate control instructions to vehicle control system 228 for execution to perform a cautious maneuver (e.g., mildly slow down, accelerate, change lane, or swerve). In contrast, if the collision cannot be avoided, then autonomous vehicle controls 226 may transmit appropriate control instructions to vehicle control system 228 for execution of an emergency maneuver (e.g., brake and/or change direction of travel).

Trajectory tracking 224h also plans a trajectory ("trajectory generation") for an autonomous vehicle to traverse on a pre-defined route (e.g., a nominal route generated by route planning 224c). The trajectory specifies a path for the autonomous vehicle, as well as, a velocity profile. Autonomous vehicle control 226 converts the trajectory into control instructions for vehicle control system 228, including but not limited to throttle/brake and steering wheel angle commands. Trajectory generation may involve making decisions relating to lane changes, such as, without limitation, whether a lane change is required, where to perform a lane change, and when to perform a lane change. Specifically, one objective of motion planning 224g is to generate a trajectory for motion of the vehicle from a start position to a destination on the nominal route, taking into account the perception and prediction data.

Motion planning 224g may generate a trajectory by performing topological planning using the topological planning techniques described herein to generate a set of constraints for each of a plurality of topologically distinct classes of trajectories, optimizing a single candidate trajectory for each class, and scoring the candidate trajectories to select an optimal trajectory. Topological classes are distinguished by the discrete actions taken with respect to obstacles or restricted map areas. Specifically, all possible trajectories in a topologically distinct class perform the same action with respect to obstacles or restricted map areas. Obstacles may include, for example, static objects, such as, traffic cones and bollards, or other road users, such as, pedestrians, cyclists, and cars (e.g., moving cars, parked cars, double parked cars, etc.). Restricted map areas may include, for example, crosswalks and intersections. Discrete actions may include, for example, to stop before or proceed through, to track ahead or behind, or to pass on the left or right of an object (e.g., obstacle, constraint, etc.).

Motion planning 224g may use the preferred route information provided by route planning 224c in combination with perception data, prediction data to select the optimal trajectory, as discussed below.

As discussed above, motion planning 224g determines or generates planning and control data regarding the movement of the autonomous vehicle that is transmitted to vehicle control system 228 for execution. Vehicle control system 228 may, for example, control braking via a brake controller; direction via a steering controller; speed and acceleration via a throttle controller (in a gas-powered vehicle); or a motor speed controller (such as, a current level controller in an electric vehicle); a differential gear controller (in vehicles with transmissions); and/or other controls.

Actuator adapter system 230 may include one or more actuators that are coupled to vehicle control system 228 and/or otherwise connected or included within the autonomous vehicle. Examples of such actuators may include, without limitation, lanes 230a that recognizes the markings on a road so that if a vehicle or other object crosses these markings, lanes 230a acts on the steering, by correcting its position. At the same time, the system may detect when the driver removes her hands from the wheel for a period of time (e.g., a few seconds), the system may be configured to play a sound and visual warning will activate so that the driver takes the car's controls once again.

Door 230b actuator modules manage all actuators in the driver or passenger door and may be directly connected to vehicle control system 228. Central locking for doors 230b and trunks 230c (e.g., tailgate, etc.), window 230d actuators, as well as, mirror adjustments are controlled by an engine control unit (e.g., ECU) under control of vehicle control system 228. Light management is also part of the functionality, including illumination of the switch panel lock and mirror heating status and entrance light for user experience. Lights 230e may increase the high beams or control other lighting, and an actuator for emergency 230f control is capable of fully stopping the vehicle in case a driver moves her hands away from the steering for a programmed period of time to understand that the driver has suffered some form of loss of consciousness.

Sensor system 232 may include one or more sensors that are coupled to vehicle control system 228 and/or otherwise connected or included within the autonomous vehicle. Examples of such sensors include, without limitation, LiDAR 232c, RADAR 232b, one or more cameras 232a (e.g., visible spectrum cameras, infrared cameras, etc.), temperature 232d, position sensors, location 232e (e.g., global positioning system (GPS), etc.), fuel sensors, speed sensors, odometer sensors, motion 232f (e.g., inertial measurement units (IMU), accelerometer, gyroscope, etc.), object detection sensors, such as, one or more camera humidity sensors, environmental sensors (e.g., a precipitation sensor and/or ambient temperature sensor), occupancy sensors, or the like. The sensor data can include information that describes the location of objects within the surrounding environment of the autonomous vehicle, information about the environment itself, information about the motion of the autonomous vehicle, information about a route of the autonomous vehicle, or the like.

The autonomous vehicle may further include certain components (not shown here) included in vehicles, such as, an engine, wheels, steering wheel, transmission, etc., which may be controlled by data backbone 224 or, alternatively, autonomous vehicle controls 226, using a variety of communication signals and/or commands, such as, for example, acceleration signals or commands, deceleration signals or commands, steering signals or commands, braking signals or commands, etc.

In the various embodiments discussed in this document, the description may state that the vehicle or a controller included in the vehicle (e.g., in an on-vehicle computing system) may implement programming instructions that cause the controller to make decisions and use the decisions to control operations of one or more vehicle systems via the vehicle control system of the vehicle. However, the embodiments are not limited to this arrangement, as in various embodiments the analysis, decision making, and/or operational control may be handled in full or in part by other computing devices that are in electronic communication with the vehicle's on-vehicle controller and/or vehicle control system, such as, cloud service providers. Examples of such other computing devices include an electronic device (such as, a smartphone) associated with a person who is riding in the vehicle, as well as, a remote cloud server that is in electronic communication with the vehicle via a wireless network. The processor of any such device may perform the operations that will be discussed below.

With further reference to FIG. 2, sensor system 232 may be configured to allow communication between AV cloud system and external cloud systems, such as, for example, external devices, sensors, other vehicles, servers, data stores, databases etc. Cloud communication interface 220 may utilize any now or hereafter known protocols, protection schemes, encodings, formats, packaging, etc., such as, without limitation, Wi-Fi, an infrared link, Bluetooth^{®}, etc. driver interface system (e.g., user experience 224e and/or human interface 224i) may be part of peripheral devices implemented within an autonomous vehicle including, for example, a keypad, a touch screen display device (such as, a graphical user interface GUI), a microphone, and a speaker, etc. For example, an autonomous vehicle may include a GUI on which is displayed information of the autonomous vehicle, such as, by indicating or displaying data or information for one or more cloud services. The information displayed on a GUI may be through software and computer programs for AV systems, that are downloaded, checked, and executed in connection with the AV (e.g., autonomous vehicle controls 226, etc.), as described herein.

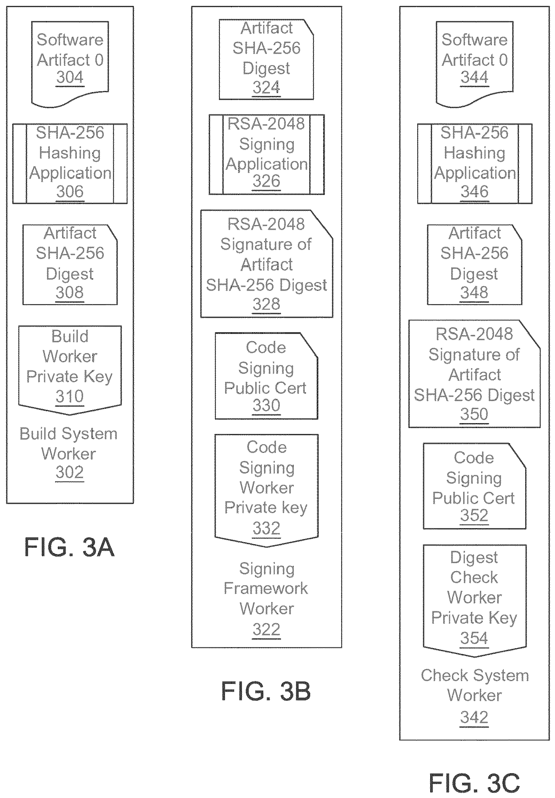

FIGS. 3A-3C are diagrams of non-limiting embodiments or aspects of an autonomous vehicle development environment where blocks with a wavy bottom are used to represent artifact content, blocks with two bar sides are representing applications, blocks with missing corner are representing data objects (digest values or certificates), and blocks with a pointed bottom are representing private keys.

FIG. 3A is a schematic structural diagram view showing build system worker 302 according to some non-limiting embodiments or aspects of the present disclosure. As shown in FIG. 3A, build system worker 302 comprises software artifact zero 304, secure hashing application 306, artifact digest 308, and build worker private key 310.

FIG. 3B is a schematic structural diagram view showing signing framework worker 322 according to some non-limiting embodiments or aspects of the present disclosure. As shown in FIG. 3B, signing framework worker 322 comprises artifact digest 324, cryptographic signing application 326, cryptographic signature of an artifact's digest 328, code signing public certificate 330, and code signing worker private key 332.

FIG. 3C is a schematic structural diagram view showing check system worker 342 according to some non-limiting embodiments or aspects of the present disclosure. As shown in FIG. 3C, check system worker 342 comprises software artifact zero 344, secure hashing application 346, artifact digest 348, cryptographic signature of an artifact's digest 350, code signing public certificate 352, and digest check worker private key 354.

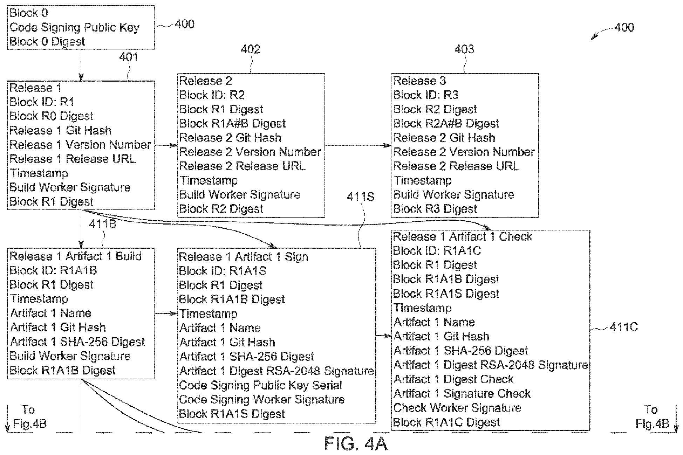

FIG. 4A is a schematic structural diagram view showing a block 400 according to some non-limiting embodiments or aspects of the present disclosure. As shown in FIG. 4A, block 400 comprises block 0 (e.g., root, zero, R0, etc.) containing a code signing public key and a block zero digest. Block 400 is the root block.

To start the block chain, block 0 is generated to contain the code signing public key. For example, the code signing public key is encoded into the root block. Any of the software artifacts that are signed on this block chain are signed using this code signing public key.

The root block is the parent of any release block (e.g., R0 is the parent of block R1, R2, R3, etc.), such that a cryptographic link is formed between the two. The cryptographic link is established by writing the root block digest to the release blocks. The root block digest is generated for R0, any release block of the software release blockchain 110 includes the root digest as data stored in the block. In addition, any other block is an ancestor of the root block (block 400).

As shown in FIG. 4A, release 401 comprises release 1 containing block id: R1, block R0 digest, release 1 git hash, release 1 version number, release 1 release URL, timestamp, build worker signature, and block R1 digest. In some non-limiting embodiments or aspects, other attributes of the release may be included in the data written to the release block.

After the root block is generated, for any new software release, a child block is generated. Each new block is added as a release block in the block chain. For example, release 401 is assigned a unique identification, such as R1 or Release1. The release information is based on the block ID.

In some non-limiting embodiments or aspects, build system worker 302 generates a release block, and one release block can have one or many software artifacts. For example, build system worker 302 creates a block in the block chain for each release, writing unique identification information based on that release's information. In the R1 Release, the block R0 digest (root block digest) identifies the parent of Block R1.

The parent of block Release R1 is R0, the root block digest of the parent is included in the R1 block establishing a cryptographic link between the two. The parent of block R1, i.e., R0, includes this digest.

As used herein, git hash refers to a specific software development source control repository reference for the release. For example, an identifier that uniquely identifies that the commit utilized for this release refers to a point in a tree of commits, such as, for example, differences between each node in a tree. When a line is added to a file, after a commit, only the line is added to the file that already exists, not the whole file. That reference to the file is made using a hash that is a unique identifier. The git hash is used by the release block and/or software artifacts to identify where the release or the software artifact came from and links it to source control (e.g., coming from a commit in source control).

In some non-limiting embodiments or aspects, a time stamp is included in the release block, identifying when the release was made. In some examples, a version number and a release URL (i.e. a link to download the release or view release information) may be included.

As shown in FIG. 4A, release artifact 411B comprises release 1 artifact 1 build (i.e. block id: R1A1B) containing block R1 digest, timestamp, artifact 1 name (e.g. the artifact's filename), artifact 1 digest, build worker signature, and block R1A1B digest.

In some non-limiting embodiments or aspects, the build worker signature - identifying the build worker that created the block - and a digest of the block, are written to the block.

As shown in FIG. 4A, release 402 comprises release 2, containing block id: R2 (i.e. release 2), block R1's digest, release 2 git hash, release 2 version number, release 2 release URL, timestamp, build worker signature, and block R2 digest. As shown, each release block is a child of the parent release block before it, ascending back to the root block.

As shown in FIG. 4A, release 403 comprises release 3, containing block id: R3, block R2 digest, release 2 git hash, release 2 version number, release 2 release URL, timestamp, build worker signature, and block R3 digest.

In some non-limiting embodiments or aspects, after build system worker 302 completes a build of the initial tree in the block chain (e.g., R1 with software artifacts built and associated blocks attached to the blockchain), the second tier of the framework is used to sign the releases.

In some non-limiting embodiments or aspects, software release blockchain is sent to signing framework, where signing worker 322 proceeds to read software release information from the release block, which includes information associated with the software artifact blocks of the software release blockchain 110 for each artifact in release 1. The signing worker obtains or retrieves (e.g. downloads, copies, etc.) the release from the Release 1 Release URL. After retrieving the release and all artifacts, the signing worker generates digests for each artifact and compares the names and digests of each artifact with those written to the artifact blocks (e.g. 411B, 412B, 413B, etc.) to confirm the integrity of the retrieved artifacts. After confirming the integrity of the artifacts, the signing worker generates signatures for them. Release 1 artifact 1 signature block has a block ID of R1A1S (i.e. release 1 artifact 1 signature), its parent block ID is R1 digest, a sibling block ID is R1A1B (i.e. release 1 artifact 1 build). The signing worker writes the retrieved artifact's name, digest, and signature to the R1A1S block. Finally, the signing worker writes the serial number of the public key used to sign the artifact, the signing worker's signature, and the digest of the current signature block.

In some non-limiting embodiments or aspects, the signing could be synchronous, such that each worker performs steps and then passes along to another worker, or alternatively, asynchronous work can be performed sequentially or in parallel. In some non-limiting embodiments or aspects when asynchronous, the software release blockchain 110 could build, then advertise for signature to signing framework worker 322, as each software artifact is added to the release. In such an example, the software release can be signed as other software artifacts are being built. Signing framework worker 322 signs as it obtains or receives a software artifact from build system worker 302. In such an example, there is no requirement for anything to happen in sequence, with exception that an artifact build block must be created before an artifact sign block can be created.

The software release blockchain 110 comprises a signed record of each release and each release's artifacts where each artifact's digest is calculated at build time, recalculated during signing, and signed. Additionally, the identity of the private key used to sign each artifact is evidenced by the public key serial number and signing worker signature.

In some non-limiting embodiments or aspects, as a block is released, it can have any number (N) of artifacts (e.g., software artifacts, software code, binaries, and code libraries installed on the AV, etc.) that must be signed cryptographically using the code-signing framework described herein. Each software artifact in a release has its own software artifact block. Each software artifact block is added to the block chain and refers to a parent block, which is the release block associated with the software artifact.

In some non-limiting embodiments or aspects, signing framework worker 322 signs all of the software artifacts for a release to generate a chain of vertical release 1 artifacts. The software artifact portion of the blockchain (e.g., a software artifact blockchain referring to a release of the software release blockchain 110) is transferred or transmitted to signing framework worker 322. In this way, a sign blockchain of release 1 may be generated or created, the sign blockchain identifying a sign of the software artifacts and indicating the sign is for release 1.

As shown in FIG. 4A, check sign 411C comprises release 1 artifact 1 check (e.g., block id: R1A1C), containing block R1 digest, block R1A1B digest, block R1A1S digest, timestamp, artifact 1 name, artifact 1 digest, artifact 1 digest signature, artifact 1 digest check, artifact 1 signature check, check worker signature, and block R1A1C digest.

In some non-limiting embodiments or aspects, check system worker 342 performs signature checking (i.e. check sign 108) for the software artifacts using the artifact's digest, and the signature, and creates a record of the signature verification using a block chain. The existence of check system worker 342 overcomes the problem where one or more artifact digests are invalid (e.g. spoofed, tampered, zeroed, etc.), is written to the block as valid, and signature is generated of the invalid digest causing an invalid signature to be written to the signature block of the artifact. By checking the signature after generation by the signing worker, the check worker ensures the digest and signature of an artifact are authentic.

In some non-limiting embodiments or aspects, check system worker 342 obtains the software artifact itself. For example, check system worker 342 asynchronously downloads the software release from the Release URL and extracts the artifacts to confirm the signatures. Check system worker 342 then confirms the block digest by reproducing the digest, recalculating the signature from the public key, and verifying the signature artifact has been generated properly. Check system worker 342 creates a record guaranteeing (e.g., a level of assurance) that the block that the build release 102, the hash of the build release 102, the digest generation of the software artifact, and the signature generation of the software artifacts were checked and verified. Check system worker 342 records the verification by writing a new digest and signature check value on the R1A1C block.

In some non-limiting embodiments or aspects, check system worker 342 may for any of the software artifacts in build release 102, first obtain the software artifact from the build archive (e.g., software artifact store, etc.). In some non-limiting embodiments or aspects, if check system worker 342 reruns the hash and determines that the hash is incorrect (e.g., no match to the original hash), we do not have to check the signature because something in the release has been tampered with or something else may not be correct. The signature that is on the block chain may not match the digest of the software artifact that was on build release 102 (which may include a digest of the root block). In such an example, check system worker 342 alerts build system worker 302 and signing framework worker 322 that software release blockchain 110 fails, and may unroll the whole software release blockchain 110 because the system determines that software artifacts (e.g., stored software artifacts 116) in this release are invalid (e.g. check failed). At this point, build system worker 302 may remake build release 102.

In some non-limiting embodiments or aspects, build system worker 302 may rebuild only one software artifact (e.g., the latest software artifacts (e.g., the most recent versions of stored software artifacts 116, the current release of stored software artifacts 116, a predetermined software artifact of stored software artifacts 116, etc.) instead of starting over (e.g., to verify that the source code referenced is actually what was built, what was built was actually what was hashed, the digest that came out of the hash function was actually what was signed, the signature of the digest is actually what was checked, etc.).

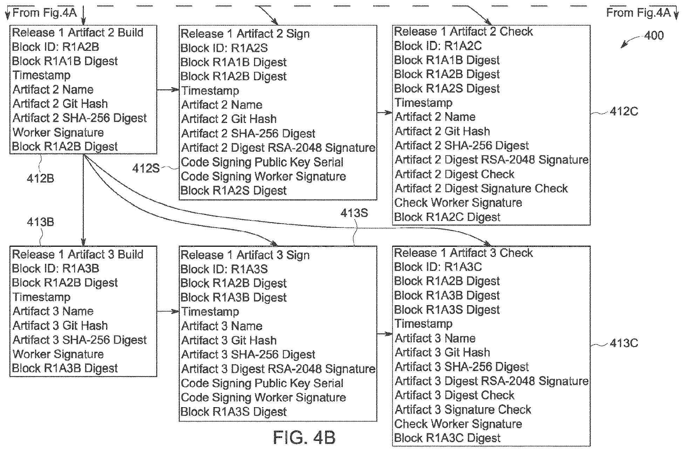

As shown in FIG. 4B, release artifact 412B comprises release 1 software artifact 2 build (e.g., block id: R1A2B), containing block R1A1B digest, timestamp, artifact 2 name, software artifact 2 digest, worker signature, and block R1A2B digest.

In some non-limiting embodiments or aspects, after a signature for software artifact 1 (e.g., release artifact 411B) has been generated, a signature is generated for software artifact 2 (e.g., release artifact 412B). In such an example, instead of referring to the root block as in release artifact 411B, parent block for release artifact 412B refers to release 1 artifact 1 build (i.e. R1A1B). Software release blockchain 110 includes 2 blocks before signing, a sibling artifact block and a parent artifact block. Artifact 1 must necessarily exist before artifact 2 can exist. So check system worker 342 knows software artifact 1 exists if it is working on software artifact 2. Same for artifact 3, because the system signs artifact 2 before signing artifact 3, check system worker 342 can be assured of and rely on the order of such operations. Then we can release this and check signs with check system worker 342.

In some non-limiting embodiments or aspects, release artifact 412B comprises the release 1 artifact 2 build (i.e. R1A2B). The block identifier references the software artifact 1 block as the upstream block. As in release artifact 411B, the software artifact block includes timestamp, name, a hash of the software artifact, a signature, and the digest for this block (e.g., a hash of the block).

The blockchain comprises a chain of records that are immutable because the blocks in the chain depend on one another. In order to change one block, any block in the chain must change (e.g., the blocks before and after a changed block). Such a blockchain overcomes inefficiencies and security problems inherent in existing systems, such as a database system, where every time a release is made, a record is made in the database that it was released, records a signature, and/or records if it was checked. The blockchain of the present subject matter overcomes such the problems, such as where a rogue party can change columns or records of the database in an insecure way, and in such systems, unless redundant, individualized, or discrete monitoring of database objects is performed, such problems could go undetected, and one may never know objects were manipulated or accessed. Such existing systems rely on external guarantees, and can provide no cryptographic dependency between each of the columns or database objects. Generating the security into a blockchain protects, in an efficient way, against a rogue agent meaningfully changing anything in the blockchain without breaking the block chain to do it.

In some non-limiting embodiments or aspects, if R1A2B (i.e. release 1 artifact 2 build block) is changed, the change indicates that R1A2S (i.e. release 1 artifact 2 signature block) is changed. The change of digest signature block propagates to block R1A2S digest changes, if that changes, then R1A2C (i.e. release 1 artifact 2 check block) changes. Then if the check signature block changes, it is determined that the build release block is invalid because it references a block that is no longer valid (e.g., no longer used in its original form), and the artifact 1 build block does not reference a valid artifact 2 build block, so the change cascades up (e.g., backward in the block chain). In addition, this change also cascades down, because the release 1 artifact 2 (i.e. R1A2B) build block is referenced in release 1 artifact 3 (i.e. R1A3B).

In some non-limiting embodiments or aspects the bad artifact blocks will be left in the blockchain. New artifact blocks (i.e. build, sign, and check) will be generated for artifacts requiring rebuilding, resigning or rechecking. In some examples, when the release is validated to determine if it is accepted to publish onto the AV, the system would iterate through all the check blocks and make sure that the software artifacts in the software release block chain were associated with valid check blocks. For example, as long as it can be determined that R1A2C (i.e. release 1 artifact 2 check) references the correct parent block, it can be determined that checking of release 1 artifact 2 has successfully completed and that artifact is at least accepted to send to the vehicle. In a faulty case, the check for artifact 2 would fail, so artifact 2 would not be accepted to include in the build or to load onto the vehicle. However, the system may be implemented to leave artifact 2 in the software release blockchain 110, or alternatively, to determine it is invalid when the block chain is loaded into the AV (e.g., unpacked, implemented, etc.) and not include R1A2B in the release bundle at that time or when the vehicle goes to inspect the check blocks, the vehicle would see that the block is invalid and it would prevent running or loading that artifact on the vehicle.

As shown in FIG. 4B, sign artifact 412S comprises release 1 artifact 2 sign (e.g., block id: R1A2S), containing block R1A1B digest, block R1A2B digest, timestamp, artifact 2 name, artifact 2 digest, artifact 2 digest signature, code signing public key serial, code signing worker signature, and block R1A2S digest.

As shown in FIG. 4B, sign check 412C comprises release 1 artifact 2 check (e.g., block id: R1A2C), containing block R1A1B digest, block R1A2B digest, block R1A2S digest, timestamp, artifact 2 name, artifact 2 digest, artifact 2 digest signature, artifact 2 digest check, artifact 2 digest signature check, check worker signature, and block R1A2C digest.

As shown in FIG. 4B, release artifact 413B comprises release 1 artifact 3 build (e.g., block id: R1A3B), containing block R1A2B digest, timestamp, artifact 3 name, artifact 3 digest, worker signature, and block R1A3B digest. Release 1 Artifact 3 build is a child to block ID is R1 artifact 2 build. R1A3B refers to the release 1 artifact 2 block as the upstream block and does the same thing as for artifact 2, e.g., add a timestamp, name, hash the software artifact, and then include a build worker signature and a digest for this block.

As shown in FIG. 4B, sign artifact 413S comprises release 1 artifact 3 sign (e.g., block id: R1A3S) containing block R1A2B digest, block R1A3B digest, timestamp, artifact 3 name, artifact 3 digest, artifact 3 digest signature, code signing public key serial, code signing worker signature, and block R1A3S digest.

As shown in FIG. 4B, sign check 413C comprises release 1 artifact 3 check (e.g., block id: R1A3C) containing block R1A2B digest, block R1A3B digest, block R1A3S digest, timestamp, artifact 3 name, artifact 3 digest, artifact 3 signature, artifact 3 digest check, artifact 3 signature check, check worker signature, and block R1A3C digest.

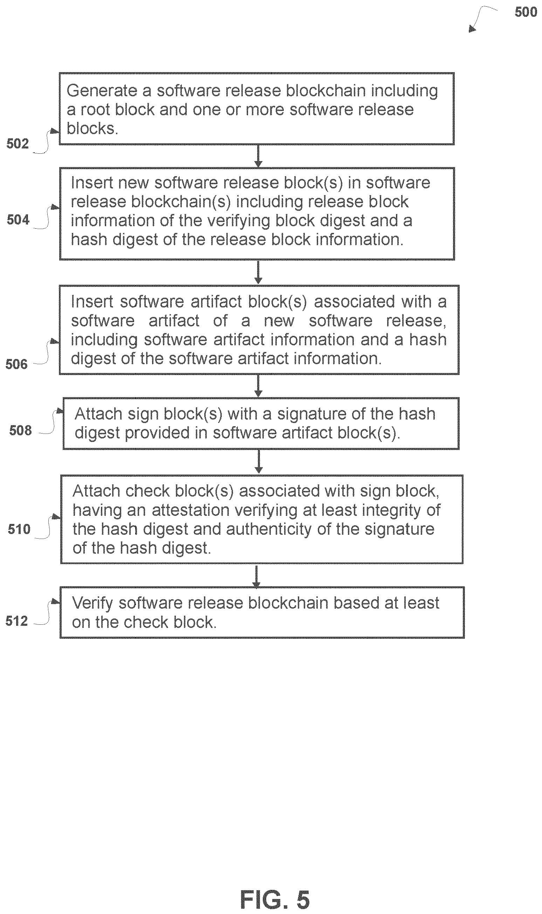

Referring now to FIG. 5, FIG. 5 is a flowchart of a non-limiting embodiment or aspect of process 500 for a permissioned blockchain and related systems to track software release artifact digests and signatures, and signatures of workers that can be verified afterward by a separate checking system that is also a part of the software release blockchain 110, while each of build system worker 302, signing framework worker 322, and check system worker 342 are independent from each other (i.e. simultaneously work from a shared blockchain ledger, operating concurrently on a system or systems where they can neither affect other processes or be affected by other processes, etc.). In some non-limiting embodiments or aspects, one or more of the steps of process 500 for providing a secure method of signing software artifacts with a permissioned blockchain to record, distribute, and audit artifact digests and signatures may be performed (e.g., completely, partially, and/or the like) by AV cloud system (e.g., one or more devices of AV global manager cloud) or AV (e.g., one or more devices of AV). In some non-limiting embodiments or aspects, one or more of the steps of process 500 may be performed (e.g., completely, partially, and/or the like) by AV (e.g., as described with reference to FIG. 2), by build system worker 302 (e.g., one or more devices of build system worker 302, one or more processes of build system worker 302, one or more devices of on-vehicle build system worker 302, etc.), signing framework worker 322 (e.g., one or more devices of signing framework worker 322, one or more processes of signing framework worker 322, etc.), and check system worker 342 (e.g., one or more devices of cloud check system worker 342, one or more devices of on-vehicle check system worker 342, etc.) .

As shown in FIG. 5, at step 502, process 500 may include generating a software release blockchain including a root block and one or more software release blocks. For example, build system worker 302 generates a software release blockchain including a root block and one or more software release blocks. According to some non-limiting embodiments or aspects, build system worker 302 generates a software release blockchain including a root block and one or more software release blocks, each software release block comprising one or more software artifact blocks associated with the software release, providing a block digest for defining a software release ledger and verifying a software release in the one or more software artifact blocks.

In some non-limiting embodiments or aspects, build system worker 302 generates its own signature using a private key and a public key. The private key and the public key may each define a part of an asymmetric key pair. In some non-limiting embodiments or aspects, other types of keys, such as, for example, a symmetric private key, a cyclic key based on a cyclic group, may be utilized.

In some non-limiting embodiments or aspects, the software release is associated with a source code control system. Thus, the software artifact may be derived from the source code control system and stored in a release repository system.

In some non-limiting embodiments or aspects, build system worker 302 generates a new software release block after determining a most recent software release block in the software release blockchain. For example, a most recent software release block is determined by traversing the one or more software release blocks while checking a block digest associated in each of the one or more software release blocks for a most recent release block digest.

The release information comprises metadata about the software release and stored in a software release block written and stored in the blockchain. The software release block is used to determine the security of the software release, which has a root block as a parent. The software release block includes information for determining integrity of a software release, authenticity and integrity of the software release block, and technical information about the block. Examples of the artifact information in a new digest block includes the following: a secure hash digest of the release (e.g., a hash digest generated over the release information), the latest release block in the chain (e.g., found in a look up table, or traversal of the blockchain, etc.), the digest of the latest release block, and a new release block with the following metadata: a digest of the previous block, a git hash of the release , a version number of the release, a URL of the release (e.g. a URL to a release download location or to a release information page), a current timestamp, a worker's own cryptographic signature, or a digest of the release block's metadata.

In some non-limiting embodiments or aspects, build system worker 302 generates the software artifact block, for the software artifact block that is associated with the software artifact of the new software release. The software artifact block includes artifact information and a hash digest of the software artifact.

The artifact information comprises information about the software artifact block that can be stored in the block chain. The artifact block is used to determine the security of the software artifact, including integrity of a software artifact, authenticity and integrity of the software artifact block, and technical information about the block. Examples of the artifact information includes the following in a new digest block with the following: a secure hash digest of the artifact, the latest digest block in the chain based on a lookup, the digest of the latest block, digest of the previous block, current timestamp, the name of the artifact, git hash referencing the commit, a secure hash digest, a worker's own cryptographic signature, a digest of the new digest block's data.

In some non-limiting embodiments or aspects, build system worker 302 generates a plurality of software artifact blocks to include the above fields in a blockchain, each of the plurality of software artifact blocks attached to and including a hash digest of a previously generated software artifact block. The hash digest comprising a hash of the one or more of the fields in a block digest (e.g., a hash of a digest block in each software artifact).

In some non-limiting embodiments or aspects, a build system worker further comprises a plurality of build system workers and wherein each build system worker is associated with a private key that is unique and inserting a software artifact using the private key. Build system worker 302 may include a computing device identified with a user, wherein the credentials are directly associated with the computing device (e.g., a desktop, mobile phone, server, laptop, etc.). In some examples, many credentials can be associated in an application (e.g., with a user credential, a token, etc.) and selectively activated automatically by computing device associated with build system worker 302, signing framework worker 322, check system worker 342, an AV build system worker, a DBMS worker, and/or the like.

In some non-limiting embodiments or aspects, build system worker 302 detects a software artifact block is a new software artifact block by detecting a hash digest includes a new software artifact block. Build system worker 302 may detect a hash digest of a new software artifact block based on a verification, such as verifying release block information (e.g., a portion of the release block information.).

In some non-limiting embodiments or aspects, signing framework worker 322 in response to detecting the new software artifact block, generates the sign block associated with the new software artifact block. For example, signing framework worker 322 may monitor the sign block to determine when a new software artifact is added (e.g., one or more processes of signing framework worker 322 may automatically determine when a new software artifact is added.).

In some non-limiting embodiments or aspects, check system worker 342 detects when the software artifact block is a new software artifact block and, in addition, when the sign block is a new sign block. If check system worker 342 determines a new software artifact block and new sign block, then in response to detecting the new sign block and the new software artifact block, check system worker 342 generates a check block verifying the new sign block.

As shown in FIG. 5, at step 504, process 500 may include inserting a new software release block in the software release blockchain including release block information of the verifying block digest and a hash digest of the release block information. For example, build system worker 302 inserts a new software release block in the software release blockchain including release block information of the verifying block digest and a hash digest of the release block information. According to some non-limiting embodiments or aspects, build system worker 302 inserts a new software release block in the software release blockchain, the new software release block including release block information of the verifying block digest and a hash digest of the release block information.

In some non-limiting embodiments or aspects, build system worker 302 determines the most recent software release blocks in the software release blockchain. For example, build system worker 302 checks data (e.g., compares release data of a release block, timestamp, previous block digest, block data, etc.) for one or more block digests for one or more respective software release blocks. Build system worker 302 may then insert the new software release block in the software release blockchain after a most recent software release block. In some examples, build system worker 302 determines the most recent software release block of the one or more software release blocks in the software release blockchain by traversing the one or more software release blocks while checking a block digest associated with each of the one or more software release blocks for a most recent release block digest.

As shown in FIG. 5, at step 506, process 500 may include inserting software artifact blocks associated with a software artifact of a new software release, including software artifact information and a hash digest of the software artifact information. For example, build system worker 302 inserts software artifact blocks associated with a software artifact of a new software release, including software artifact information and a hash digest of the software artifact information. According to some non-limiting embodiments or aspects, build system worker 302 inserts one or more software artifact blocks associated with a software artifact of a new software release. For example, build system worker 302 inserts each software artifact block of the one or more software artifact blocks in the software release blockchain 110 including software artifact information and a hash digest of the software artifact information.

Build system worker 302 may insert a new software artifact block in the software release blockchain 110 after the most recent software artifact block. In some examples, build system worker 302 determines the most recent software artifact block of the one or more software artifact blocks in the software artifact blockchain by traversing the one or more software artifact blocks while checking a block digest associated with each of the one or more software artifact blocks for a most recent software artifact block digest.

In some non-limiting embodiments or aspects, a software artifact block includes a link to a storage or repository location of the software artifact. In such an example, a software release blockchain may include a plurality of unrelated software releases, each of the unrelated software releases initiating from a separated software release block

In some examples, software release blockchain 110 includes a software release having a plurality of software artifact blocks, a plurality of sign blocks, an auditing blockchain that includes a plurality of check blocks associated with a respective plurality of software artifact blocks, a respective plurality of signing blocks, and/or the like.

As shown in FIG. 5, at step 508, process 500 may include attaching a sign block with a signature of the hash digest provided in the software artifact block. For example, check system worker 342 attaches a sign block with a signature of the hash digest provided in the software artifact block. According to some non-limiting embodiments or aspects, signing framework worker 322, a sign block (e.g., data for authenticating release block information from the software artifact block, etc.) associated with a software artifact block of the one or more software artifact blocks, the sign block comprising a signature of the hash digest in the software artifact block.

In some non-limiting embodiments or aspects, signing framework worker 322 (e.g., code signing worker, signing framework, etc.) generates a sign block authenticating information about the software release and stored in a software release block written and stored in the blockchain. Signing framework worker 322 determines the security of the software artifact block, which has a software release block as a parent.

The software artifact blocks 304 include information for determining integrity of a software artifact block, authentication of the software artifact block, and technical information about the software artifact, such as determining information related to the previous digest block's digest, checks the new digest block's digest, extracts the artifact digest from the metadata, and creates a new sign block with the following metadata.

In some non-limiting embodiments or aspects, examples of the software artifact information includes the following in a new digest block with the following data: digest of the previous digest block, digest of the current digest block, current timestamp, name of the artifact, secure hash digest, cryptographic signature of the secure hash digest, serial number of the code signing certificate used to generate the signature, worker's own cryptographic signature, and a digest of the new sign block's metadata.

In some non-limiting embodiments or aspects, signing framework worker 322 generates a sign block associated with the software artifact block. For example, signing framework worker 322 obtains release block information of a software artifact block. Next, signing framework worker 322 checks or determines a hash digest of a previous digest block. Signing framework worker 322 may check or determine a hash digest of a new digest block.

Signing framework worker 322 generates by extracting or obtaining a software artifact digest from the release block information of other software artifact blocks and at least some software artifact information based on the current software artifact. The signing framework worker 322 retrieves the software release artifact (e.g. downloads, copies, etc.) from the software release repository and generates a hash digest of the retrieved artifact.

The signing framework worker 322 compares the artifact block's digest and the artifact's generated digest. The signing framework worker 322 generates the hash for the artifact independently for the purpose of confirming the integrity of the retrieved software artifact and confirming the security and acceptability of the hashing algorithm used when the software artifact's digest was added to the artifact block. If the artifact digests do not match, it indicates that the retrieved artifact is incomplete or has been tampered with, necessitating that it be re-retrieved, or that the original artifact digest written to the artifact block was improperly generated and shall not be signed.

In some non-limiting embodiments or aspects, signing framework worker 322 inserts a new sign block defined by a plurality of the following: a digest of the previous artifact block, a current timestamp, a name of the software artifact, a hash digest, a signature of a hash digest, a serial number of a code signing certificate used to generate a signature, a signature of a build worker, or a digest of signing information associated with a signing block.

In some non-limiting embodiments or aspects, the sign block and the check block are generated or produced by signing framework worker 322 and check system worker 342, synchronously or consecutively, or alternatively, the check block is generated asynchronously after the sign block, and the check block and the sign block do not impede each other. The check block and sign block can also be dependent on each other to automate dependencies.

As shown in FIG. 5, at step 510, process 500 may include attaching a check block associated with a sign block, with an attestation verifying at least integrity of the hash digest and authenticity of the signature of the hash digest. For example, check system worker 342 may attach a check block associated with a sign block, the check block comprising an attestation verifying at least integrity of the hash digest and authenticity of the signature of the hash digest. According to some non-limiting embodiments or aspects, check system worker 342 attaches a check block associated with the sign block, the check block comprising an attestation verifying at least integrity of the hash digest and authenticity of the signature of the hash digest.

The check system worker 342 retrieves the software release artifact (e.g. downloads, copies, etc.) from the software release repository and generates a hash digest of the retrieved artifact. The check system worker verifies the authenticity of the signature written to the sign block.

The check system worker 342 compares the sign block's digest and the artifact's generated digest. The check system worker 342 generates the hash for the artifact independently for the purpose of confirming the integrity of the retrieved software artifact, confirming the security and acceptability of the hashing algorithm used when the software artifact's digest was added to the artifact block, and the authenticity of the signature applied by the signing framework worker 322. If the artifact digests do not match or the signature is inauthentic, it indicates that the retrieved artifact is incomplete or has been tampered with - necessitating that it be re-retrieved, that the original artifact digest written to the artifact block was improperly generated, or the signature is inauthentic and invalid.

In some non-limiting embodiments or aspects, check system worker 342 produces, generates, or provides a new check block associated with the new sign block. The check system worker 342 verifies digital worker signatures from the software release block and the software artifact block, before generating or producing a new check block in software release blockchain 110.

In some non-limiting embodiments or aspects, check system worker 342 obtains or extracts signing block information of the new sign block. Additionally, check system worker 342 checks or determines a hash digest of the previous digest block.

Check system worker 342 inserts the check block with a digest block defined by a plurality of the following: a digest of the previous digest block,, a current timestamp, a name of the software artifact, a hash digest of a parent or previous digest block, a signature of a hash digest copied from the sign block, a serial number of a code signing certificate used to generate a signature copied from the sign block, a value representing the check state of the artifact digest, a value representing the check state of the artifact digest signature, a signature of a build worker, or a hash digest of the current block.

As shown in FIG. 5, at step 512, process 500 may include verifying the software release blockchain based at least on the check block. For example, check system worker 342 verifies the software release blockchain based at least on the check block. According to some non-limiting embodiments or aspects, check system worker 342 verifies the software release blockchain based at least on the check block. In other examples, build system worker 302 or signing framework worker 322 verify the software release blockchain based at least on the check block.

In some non-limiting embodiments or aspects, one or more software artifacts are associated with an AV system and auditing or security is performed when an on-board software release AV distribution worker (e.g., one or more systems of an AV) obtains the software release blockchain 110 (e.g., via a communication interface). For example, AV distribution worker retrieves or obtains the software artifacts before checking each software artifact and then installing a software artifact in the AV system.

In some non-limiting embodiments or aspects, a worker (e.g., build system worker 302, signing framework worker 322, AV distribution worker, etc.) verifies the software release blockchain based at least on the check block. For example, a worker validates one or more hash digests by first determining a current hash digest, then a private key signature of a check signing worker for each check block in a chain of software artifact blocks of the software release blockchain before proceeding. In some non-limiting embodiments or aspects, a worker validates any hash digests simultaneously, or validates each field in a check block. After receiving a validation for check system worker 342, the worker checks a previous digest. The worker then validates worker signatures of each software artifact of a software release.

In some non-limiting embodiments or aspects, a worker obtains a chain of software artifact blocks from software release blockchain 110 that may include a link to the software artifact. Then, a worker such as build system worker 302 or AV distribution worker compares the chain of software artifact blocks to a respective associated check block. A worker may then verify a signed digest was generated properly. For example, AV distribution worker may check the signatures of all artifacts in a software release without having to check all of the software artifacts. In such an example, the check is based on verifying information in a check block of a sign block defining a plurality of the following: a digest of a previous digest block, a current timestamp, a name of the software artifact, a hash digest, a signature of a hash digest, a serial number of a code signing certificate used to generate a signature, a signature of a build worker, or a digest of signing information associated with a signing block.

In some non-limiting embodiments or aspects, validation occurs in the build system in cloud infrastructure before it is passed on to the vehicle system. Alternatively, validation of the signature may occur on the vehicle, when it obtains the software artifact and hashes it on the AV. The AV compares the hash it generates to the one that was signed in the signed digest, and based on the signing certificate so the AV trusts the signature is authentic, because it has run the hash, and can guarantee that it is authentic based on the signed digest.

In some non-limiting embodiments or aspects, build system worker 302 or AV distribution worker in the on-board system, receive, retrieve, or obtains the software artifact, signed digest of the software artifact and code signing public certificate. When build system worker 302 or AV distribution worker has obtained the software artifact and the signed digest, a check is performed by comparing the obtained signature against a signature in the software artifact (e.g., a signed software artifact, etc.) to make sure that it is authentic. For example, build system worker 302 or AV distribution worker will obtain the software artifact's signed digest and validate it against the public key of the software release. If the signature validates, then the signature is valid and that means that the software artifact is valid.

In some non-limiting embodiments or aspects, a check block is configured to include any signature needed to determine the validity of a document. The check block is repository of all security information and is itself authenticated by multiple parties across the check block.

Checking the digest ensures integrity (e.g., in cases where two data points show there has not been changes or modification because you get same digest, etc.), authenticity by signing the digest (an authority has signed this digest and is attesting to its authenticity) because the code signing public certificate is available, and compared to determine if the two match. If it does then the software artifact delivered is trusted as it has integrity and authenticity.

In some non-limiting embodiments or aspects, sign framework worker 322 generates a signature. The signature is created for each software artifact of a respective release block. Build system worker 302 or AV distribution worker (e.g., an external computing system, a service partner, etc.) can further determine a blockchain ledger is verified for release by secure systems, as attested to by a hashing algorithm that has been authorized twice via the hash digest of the software artifact information and a software artifact digest of a check sign, a signing algorithm has been approved twice via a software artifact digest from a first worker and a software artifact signature check from a second worker, or a private key approved sign artifact digest has been obtained from a software artifact signature check.

In some non-limiting embodiments or aspects, other tests include determining a timestamp included in a sign block of a software artifact block and then comparing the timestamp of a sign block for a software artifact block against a timestamp of the software artifact in a code storage or, alternatively, a code repository. Sign framework worker 322 also generates the signature of a software artifact to require two secrets, such as credentials to a code signing application (e.g., build system worker 302, signing framework worker 322, check system worker 342, etc.) in addition to the code signing private key. In such an example, an API of a check system worker 342 generates an alert that build system worker 302 has generated an invalid software artifact block and sends the alert to at least one build system worker 302 when the code signing application (e.g., signing framework, signing framework worker 322, etc.) detects if a software artifact is tampered with or, alternatively, if a software artifact digest is modified.

In some non-limiting embodiments or aspects, build system worker 302 or AV distribution worker verifies the software release blockchain based at least on the check block provided in the AV. For example, build system worker 302 or another cloud system transfers a software release blockchain 110 to the AV via an on-board software release distribution worker. Next, build system worker 302 determines, or, alternatively, if the on-board software release distribution worker is available in the AV, determines that a certified build system worker 302 generated the software artifact. AV release distribution worker or build system worker 302 determines that an approved code signing framework worker signed the software artifact. AV release distribution worker or build system worker 302 determines that an approved check system worker checked the hash digest of the software artifact and software artifact signature.

In some non-limiting embodiments or aspects, any block is determined to be invalid by comparing a hash digest of a software artifact block with a hash generated by the check system worker of the software artifact.

Those skilled in the art should understand that the embodiment of the method of the present disclosure can be provided as a method, a system or a computer program product. Accordingly, the present disclosure can take the form of a complete hardware embodiment, a complete software embodiment, or an embodiment combining software and hardware aspects. Moreover, the present disclosure can take the form of a computer program product embodied on one or more computer-usable non-transitory storage media (including, but not limited to, a disk memory, a CD-ROM, an optical memory or the like) containing computer usable program codes.

The present disclosure is described with reference to the flow diagrams and/or block diagrams of the method, device (system) and the computer program product in the embodiments of the present invention. It should be understood that computer program instructions can achieve each flow and/or block in the flow diagrams and/or block diagrams and the combination of the flows and/or blocks in the flow diagrams and/or block diagrams. These computer program instructions can be provided to a special-purpose computer, an embedded processor or processors of other programmable data processing devices to generate a machine, such that the instructions executed by computers or the processors of other programmable data processing devices generate apparatuses used for achieving specified functions in one or more flows in the flow diagrams and/or one or more blocks in the block diagrams.

These computer program instructions can also be stored on computer readable memories that are capable of guiding the computers or the other programmable data processing devices to work in a specific manner so that the instructions stored in the computer readable memories generate a product including an instruction apparatus and the instruction apparatus implements specified functions in one or more flows in the flow diagrams and/or one or more blocks in the block diagrams.

These computer program instructions can also be loaded onto the computers or the other programmable data processing devices so that a series of operation steps are executed on the computers or the other programmable devices to generate the processing implemented by the computers, therefore the instructions executed on the computers or the other programmable devices provide steps for implementing the specified functions in one or more flows in the flow diagrams and/or one or more blocks in the block diagrams.

Although the above systems, methods, and computer program products have been described in detail for the purpose of illustration based on what is currently considered to be the most practical and preferred embodiments, it is to be understood that such detail is solely for that purpose and that the present disclosure is not limited to the described embodiments but, on the contrary, is intended to cover modifications and equivalent arrangements that are within the spirit and scope of the appended claims. For example, it is to be understood that the present disclosure contemplates that, to the extent possible, one or more features of any embodiment can be combined with one or more features of any other embodiment or example.

In order to avoid obscuring the concepts of the present disclosure, some details known in the art are not described. Those skilled in the art can fully understand how to implement the technical solutions disclosed herein according to the above description. For the apparatus embodiment, the involved steps have a corresponding relationship with the contents in the method embodiment, thus related parts can refer to a part of illustration in the method embodiment.

Some specific embodiments of the present disclosure have been described in detail by way of example, those skilled in the art should understand that the above embodiments are merely used for illustrating, rather than limiting the scope of the present disclosure. Those skilled in the art should understand that modifications or equivalent substitutions to a part of technical features can be made to the above embodiments without departing from the scope and spirit of the present disclosure. The scope of the present disclosure is defined by the appended claims.

## Claims

1. A computer-implemented method for secure code signing of one or more software artifacts for recording, distributing, and auditing of software artifact via hash digests and worker signatures, comprising:
generating, by a build system worker, a software release blockchain including a root block and one or more software release blocks, each software release block comprising one or more software artifact blocks associated with the one or more software artifacts comprising a software release, providing a block digest for defining a software release ledger and verifying a software release in the one or more software artifact blocks;
inserting, by the build system worker, a new software release block in the software release blockchain, the new software release block including release block information of a verifying block digest and a hash digest of the release block information;
inserting, by the build system worker into the software release block, one or more software artifact blocks associated with a software artifact of a new software release, each software artifact block of the one or more software artifact blocks including software artifact information and a hash digest of the software artifact information;
attaching, by a code signing worker, a sign block associated with a software artifact block of the one or more software artifact blocks, the sign block comprising a signature of the hash digest of the software artifact associated with the software artifact block;
attaching, by a check system worker, a check block associated with the sign block, the check block comprising an attestation verifying at least integrity of the hash digest and authenticity of the signature of the hash digest; and
verifying the software release blockchain based at least on the check block.

2. The computer-implemented method of claim 1, wherein inserting the new software release block further comprises inserting the new software release block in the software release blockchain after a most recent software release block.

3. The computer-implemented method of claim 2, further comprising:
generating the new software release block in response to determining the most recent software release block in the software release blockchain;
generating the software artifact block associated with the software artifact of the new software release, including artifact information and a hash digest of the software artifact;
detecting the software artifact block is a new software artifact block by detecting the hash digest includes a new software artifact block based on verifying at least a portion of the release block information;
in response to detecting the new software artifact block, generating the sign block associated with the new software artifact block;
detecting the software artifact block is a new software artifact block and the sign block is a new sign block; and
in response to detecting the new sign block and the new software artifact block, generating the check block verifying the new sign block.

4. The computer-implemented method of any of claims 1-3, wherein the signature is generated using a private key and a public key, and wherein the private key and the public key are each parts of an asymmetric key pair, and
wherein a software release is associated with a source code control system, and the software artifact is securely stored within a software release repository.

5. The computer-implemented method of any of claims 1-4, wherein the code signing worker authenticates release block information from the software artifact block, and wherein generating a sign block associated with the software artifact block comprises:
obtaining the release block information of the software artifact block;
checking the hash digest of a previous digest block;
checking the hash digest of a new digest block;
extracting a software artifact digest from the release block information;
retrieving the software artifact associated with the software artifact digest from a software release repository;
generating a hash digest by performing a hashing operation on the retrieved software artifact;
correlating the hash digest extracted from the release block information and the hash digest generated from the retrieved software artifact; and
inserting a new sign block with a digest block defined by a plurality of the following: a digest of the previous digest block, a current timestamp, a name of the software artifact, a software artifact hash digest, a signature of a hash digest, a serial number of a code signing certificate used to generate a signature, a signature of a build system worker, or a digest of signing information associated with a signing block.

6. The computer-implemented method of any of claims 1-5, wherein verifying the software release blockchain further comprises:
obtaining a chain of software artifact blocks that include a reference to the original software artifact;
comparing the chain of software artifact blocks to a respective associated check block; and
verifying a signing hash was generated properly, based on verifying information in a digest block of a sign block defining a plurality of the following: a digest of a previous digest block, a digest of a current digest block, a current timestamp, a name of the software artifact, a reference to a source code repository commit, a hash digest, a signature of a hash digest, a serial number of a code signing certificate used to generate a signature, a signature of a build system worker, a value representing the check state of the artifact digest, a value representing the check state of the artifact digest signature, and a digest of signing information associated with a signing block.

7. The computer-implemented method of any of claims 1-6, wherein the sign block and the check block are generated synchronously or, alternatively, the check block is generated asynchronously after the sign block, such that the check block and sign block do not impede each other.

8. The computer-implemented method of any of claims 1-7, wherein verifying the software release blockchain based at least on the check block, comprises:
validating one or more hash digests by first determining a current hash digest and then a signature of a check signing worker for each check block in a chain of software artifact blocks of the software release blockchain before proceeding; and
after receiving a validation of the check signing worker, checking a previous digest, and validating worker signatures of each software artifact of a software release.

9. The computer-implemented method of any of claims 1-7, wherein verifying the software release blockchain based at least on the check block, comprises:
determining a timestamp included in a sign block of a software artifact block;
comparing the timestamp of a sign block for a software artifact block against a timestamp of the software artifact in a code storage or, alternatively, a code repository;
wherein generating the signature of a software artifact requires two secrets, credentials to the code signing application and the code signing private key; and
wherein code signing framework API generates an alert that the build system worker has generated an invalid software artifact block, and sends the alert to at least one build system worker when the code signing application detects if a software artifact is tampered with or, alternatively, if a software artifact digest is modified.

10. The computer-implemented method of any of claims 1-7, wherein verifying the software release blockchain based at least on the check block is provided in an AV, the method further comprising:
transferring software release blockchain to the AV via an on-board software release distribution worker;
authorizing the build system worker, or alternatively, determining by the on-board software release distribution worker that a certified build system worker generated the software artifact;
determining, by the on-board software release distribution worker, that an approved code signing framework worker signed the software artifact; and
determining, by the on-board software release distribution worker, that an approved check system worker checked the hash digest of the software artifact and software artifact signature.

11. The computer-implemented method of any of claims 1-10, wherein the software artifacts are associated with an AV system, and auditing comprises: obtaining the software release blockchain in an AV, retrieving the software artifacts, and checking each software artifact before installing a software artifact in the AV system.

12. The computer-implemented method of any of claims 1-11, wherein determining a most recent software release block of the one or more software release blocks in the software release blockchain comprises traversing the one or more software release blocks while checking a block digest associated with each of the one or more software release blocks for a most recent release block digest.

13. The computer-implemented method of any of claims 1-12,
wherein a signature is created for each software artifact of a respective release block, and
wherein a blockchain ledger is verified for release by secure systems, as attested to by:
a hashing algorithm that has been authorized twice via the hash digest of the software artifact information and a software artifact digest of a check sign;
a signing algorithm that has been approved twice via a software artifact digest from a first worker and a software artifact signature check from a second worker; and
an authentic signed software artifact digest, obtained from a software artifact signature check.

14. A system, comprising means for carrying out the method of any of the above method claims.

15. A computer program, or a data storage medium storing the computer program, comprising instructions which, when executed via one or more processors, cause any of the processors to carry out the method of any of the above method claims.
